# EUROPEAN PATENT SPECIFICATION

(11) **EP 4 453 266 B1**
(45) Date of publication and mention of the grant of the patent: **10.06.2026**
(21) Application number: 22821632.1
(22) Date of filing: 29.11.2022
(51) Int. Cl.: C22B 3/08, C22B 3/10, C22B 3/44, C22B 11/00, C22B 15/00, C22B 3/00

(54) **HYDROGEN-BASED VALORISATION OF METAL-CONTAINING FEED MATERIALS TO EXTRACT METALS**
WASSERSTOFFBASIERTE VERWERTUNG VON METALLHALTIGEN EINSATZSTOFFEN ZUR GEWINNUNG VON METALLEN
VALORISATION À BASE D'HYDROGÈNE DE MATÉRIAUX DE CHARGE D'ALIMENTATION CONTENANT DU MÉTAL POUR EXTRAIRE DES MÉTAUX

(30) Priority: 23.12.2021 GB 202118901
(43) Date of publication of application: 30.10.2024
(73) Proprietor: Lifezone Ltd, Douglas IM1 1EE (IM)
(72) Inventor: LIDDELL, Keith Stuart, Normandy Surrey GU3 2JE (GB); ADAMS, Michael David, Amphur Thalang Phuket 83110 (TH)
(74) Representative: Reddie & Grose LLP
(86) International application number: PCT/IB2022/061519
(87) International publication number: WO 2023/119017

(56) References cited:
- CA-A- 1 160 055
- US-A1- 2016 340 201
- US-A1- 2018 037 470
- US-A1- 2018 371 578

## Description

### FIELD OF THE INVENTION

This invention relates to a hydrometallurgical process for extracting and recovering valuable metals contained within metalliferous minerals including ores, concentrates and other materials and generation of useful by-products including sulfur, calcium, oxygen, carbon and hydrogen, wherein the process comprises the use of a hydrogen generator, such as an water electrolyser, hydrocarbon pyrolyser or reformer to produce hydrogen, and optionally carbon and oxygen integrated into a single circuit that converts the CO₂ and SO₂ pollutants that would be emitted by the conventional pyrometallurgical process into the useful by-products. The process further converts iron-rich waste from the process into "green steel" or a precursor thereof. In particular, the process may be integrated into one or more existing valuable element extraction processes. In a further possible embodiment of the invention, use of a brine electrolyser may be included in the process to produce reagents such as chlorine, sodium hypochlorite, sodium chlorate, hydrochloric acid or caustic soda, or their halogen or alkali metal analogues, for use in the leach steps and/or in the metals recovery processes, or which may be recovered for sale.

### BACKGROUND OF THE INVENTION

Feedstocks containing multiple valuable metals or other saleable materials present a metallurgical and environmental challenge to the recovery and separation of such valuable elements into commercially feasible products using conventional processing techniques based on pyrometallurgy, as these generally produce undesirable or polluting emissions. This is typically the case for feedstocks containing valuable metals such as platinum group metals (PGMs), gold or silver, and other valuable base and rare metals such as nickel, cobalt, copper, lithium, rare earth elements (REE), yttrium and scandium, and uranium, thorium, manganese, zinc, cadmium, molybdenum, titanium, tin, and other minor elements such as vanadium, germanium and gallium.

US 2018/371578 A1 describes a hydrometallurgical process for the recovery and separation of valuable precious, base or rare elements such as platinum group metals (PGMs), gold or silver, and other valuable base and rare metals from a feed material comprising quantitative removal of additional base, rare and gangue elements for increased efficiency of further treatment of the solids for valuable metals recovery and/or recycling and/or separation of valuable metals from pressure leach residue.

US 2016/340201 A1 describes a high pressure acid leach process with a nickel oxide ore feedstock for separating a leach residue from which a hematite-containing material that can be used as a raw material for ironmaking.

It would be useful if alternative hydrometallurgical processes might be developed for the extraction and recovery of such valuable metals and other valuable by-products containing elements such as sulfur, calcium, carbon, oxygen, and hydrogen, that could simultaneously mitigate or overcome polluting emissions and wastes, and/or be used as recycled elements in the hydrometallurgical processes, thereby to facilitate the commercial feasibility and improve environmental impact of such extraction and recovery processes.

### SUMMARY OF THE INVENTION

According to a first embodiment of the invention there is provided a hydrometallurgical process for extraction and recovery, from a feed material or blend of feed materials, of one or more valuable metals or elements comprising or consisting of: precious metals selected from a group comprising or consisting of platinum group metals (PGMs) i.e. platinum, palladium, rhodium, iridium, ruthenium, osmium, gold and silver; base metals selected from a group comprising or consisting of aluminum, copper, lead, nickel, cobalt, tin, tungsten, zinc, cadmium and manganese, but most particularly nickel, cobalt, copper and zinc; and optionally rare elements selected from a group comprising or consisting of rare earth elements, lithium, germanium, gallium, indium, scandium and other nominal valuable metals that may be worth recovering, including uranium, thorium, molybdenum and vanadium,
wherein iron-rich waste in the feedstock is converted into "green steel" or a precursor (**14**), and
wherein CO₂ and SO₂ pollutants emitted by the hydrometallurgical process are converted into by-products for sale, are used as feed material in further process(es), or are recycled within the hydrometallurgical process, the process comprising or consisting of the following steps:
   (i) generating hydrogen and optionally carbon and/or oxygen products with the use of a hydrogen generator (**12**), including by electrolysis of water or hydrocarbon pyrolysis or reforming, including with the use of renewable energy or waste sources;
   (ii) leaching (**18**) the feed material or the blend of feed materials (**16**), selected from a group comprising or consisting of a sulfide or other concentrated ore, an oxide or laterite ore, a leach residue or a pre-conditioned leach residue, or any combination thereof, under pressure and/or atmospheric conditions and oxidative, neutral or reductive conditions to generate a slurry (**20**) comprising metal sulfates and other valuble elements in solution (**24**) and a solid leach residue (**26**) comprising valuable metals and other valuable elements, in particular, where the feed material or blend of feed materials (**16**) is in the form of a mineral sulfide concentrate, pressure or atmospheric oxidative leaching (**18**) the feed material or blend (**16**) to generate a slurry (**20**) comprising metal sulfates and other valuable elements in solution (**24**) and a leach residue (**26**) comprising valuable metals and other valuable elements;
   (iii) separating (**22**) using using filtration, thickening, centrifugation/cycloning, particle size separation techniques, gravity separation, electrostatic separation, or other standard physical separation methods, the solid leach residue (**26**) from the solution (**24**) in the leach slurry (**20**);
   (iv) neutralising and purifying (**28**), by addition of limestone and optionally air enriched with oxygen generated from the electrolysis (**12**), the separated solution (**24**), thereby to form a slurry comprising solid gypsum (**30**) and iron oxide (**32**) products and releasing carbon dioxide;
   (v) optionally, capturing released carbon dioxide produced during the neutralising and purifying step (**28**) further optionally using scrubbing agents including amines;
   (vi) separating (**34**) the solid gypsum (**30**) and iron oxide (**32**) products using filtration, thickening, centrifugation/cycloning, particle size separation techniques, gravity separation, electrostatic separation, or other standard separation methods from each other and from the purified metals (**36**);
   (vii) recovering (**38**) the purified metals (**36**) after separation including by solvent extraction, ion exchange, adsorption, precipitation, cementation, electrowinning or reduction (**40**);
   (viii) optionally reacting (**42**) carbon dioxide produced or captured, including with the use of scrubbing agents, during the neutralising and purifying step (**28**) with hydrogen generated by the hydrogen generator (**12**) to form methanol (**44**) for sale, storage, or recycling into step (i), including with the use of a process as disclosed in US patent publication no. US20170166503A1 or other known processes;
   (ix) optionally, alternatively or in addition, utilising the carbon dioxide produced or captured, including with the use of scrubbing agents, during the neutralising and purifying step (**28**) in an algal production system (**46**);
   (x) recovering remaining iron oxide (**32**) from the solid leach residue (**26**), of step (iii), including optionally subjecting the solid leach residue (**26**) to heat treatment (**54**) under reducing, neutral or oxidising conditions to form a heat-treated calcine residue, followed by an additional separation (**48**) using filtration, thickening, centrifugation/cycloning, particle size separation techniques, gravity separation, magnetic, electrostatic separation, or other standard separation methods, of the solid iron oxide (**32**) from the calcine residue, leaving a remaining siliceous residue (**50**) optionally comprising valuable metals and other elements for further purification;
   (xi) reacting (**52**) the separated iron oxide products (**32**) from step (vi) and step (x) including by a molten salt electrolysis route (such as that described in US Patent No. US8764962B2) to produce oxygen, or alternatively by hydrogen reduction using hydrogen generated by the hydrogen generator (**12**), to produce Direct Reduced Iron (DRI) or sponge iron, thereby forming "green steel" or a precursor (**14**) and optionally oxygen, depending on the "green steel" or precursor production process used; and
   (xii) optionally capturing released oxygen, when produced in step (xi), for reuse in the hydrometallurgical process.

Oxygen generated from water electrolysis (**12**) when used in step (i), and/or if generated in the iron reduction step (xi) may be used in step (ii).

In step (vii), the reduction (**40**) may be performed using hydrogen from the hydrogen generation step (**12**).

In particular, in step (viii), the methanol may be recycled to the hydrogen generation step (i) to generate carbon, including for processing to form a stable saleable by-product such as carbon black, graphite, graphene or carbon nanotubes, as well as hydrogen and oxygen for use in the hydrometallurgical processes.

For step (xi), the reaction process may include the use of renewable energy sources to produce the "green steel" or precursor.

For step (ii), in the case where significant jarosite or basic ferric sulfate is present in the solid residue (**26**), the leach slurry (**20**) is optionally subjected to a conditioning step to leach iron sulfates into solution.

Optionally, step (iv) may further include a step of partial reduction of the slurry using hydrogen produced by the hydrogen generator (**12**) or another reductant, to form one or more magnetic iron phases that can be separated from the gypsum (**30**) by magnetic separation.

Recovery (**38**) of the purified metals (**36**) of step (vii) may be performed between step (iii) and step (iv), rather than after step (iv) in the case where the purified metal (**36**) is copper.

Optionally, step (iv) may be followed by a secondary neutralisation step by addition of limestone and/or hydrated or dry lime to produce a slurry comprising a nickel-cobalt/iron mixed hydroxide precipitate and gypsum. The slurry may be subjected to filtration, thickening, centrifugation/cycloning, particle size separation techniques, gravity separation, magnetic, electrostatic separation, or other standard separation methods thereby to separate the gypsum from the nickel-cobalt/iron mixed hydroxide precipitate. In an alternative to this secondary neutralisation step, to effect separation of nickel in particular, the nickel-cobalt/iron mixed hydroxide precipitate and gypsum slurry, or separated solid nickel-cobalt/iron mixed hydroxide precipitate and gypsum is subjected to an oxidising leach step with sulfuric acid, to yield gypsum, manganese for disposal or recovery by any one of the methods in step (vii), nickel for recovery by any one of the methods in step (vii) and and cobalt which may be re-leached in a further leach step.

The gypsum after the separation step above may be subjected to sulfuric acid washing, followed by recycling to step (vii) to recover entrained nickel and cobalt in the gypsum and to produce a gypsum product for disposal or sale. The sulfuric acid may be fresh, or alternatively may be recycled sulfuric acid from the separated solution (**24**) before the neutralisation step (iv), or recycled from other sulfuric acid streams within the process of the invention.

The nickel-cobalt/iron mixed hydroxide precipitate after the separation step above may be subjected to sulfuric acid releaching to produce a solution comprising nickel and cobalt sulfates and an iron oxide hydrate containing impurity metals such as manganese, for disposal or advancing to step (vii). The sulfuric acid may be fresh, or may be recycled electrolyte from a nickel electrowinning step, or may be recycled from other sulfuric acid streams within the process of the invention.

Depending on the feed material(s) used, further steps may be incorporated into the above process of the invention. For example, more particularly:
in the case where the feedstock is a copper-gold-silver sulfide concentrate the process may consist of the following steps:
a) performing steps (i) to (iv), (vi) to (viii) and (x), and optionally steps (v), (ix) and/or (xii), but recovery of copper in step (vii) between steps (iii) and (iv), rather than after step (iv), and optionally performing an additional step of heat-treating (**54**) the separated leach residue (**26**) from the pressure or atmospheric oxidation leaching (**18**) after step (iii), thereby to to volatilize any carbonaceous minerals, optionally capturing CO₂ from the heat-treatment (**54**) using amines or other suitable scrubbing agents as per step (v), and optionally recovering residual sulfur by sublimation and condensation;
b) repeating steps (ii) to (iv), (vi) to (viii) and (x), and optionally steps (v), (ix) and/or (xii), but using a non-oxidative HCI leach in step (ii), to yield a gold-rich siliceous residue after repeated step (x), and to recover silver metal in repeated step (vii), wherein in the separation step (vi) (**34**), hydrochloric acid is recovered by distillation for recovery or recycling into the process, the gypsum product (**30**) is precipitated for recovery, and silver metal (**36**) is separated by adsorption or other method and recovered (**38**) by electrowinning or reduction (**40**), optionally with hydrogen generated by the the hydrogen generator (**12**) of step (i) or further optionally by brine electrolysis **(56);**
c) subjecting the gold-rich siliceous residue of step (b) to oxidative HCI leaching in step (ii) with oxidizing leach reagent produced via the hydrogen generator (**12**) of step (i) or optionally by brine electrolysis **(56),** followed by repeating steps (iii) to (iv), (vi) to (viii) and (x), and optionally steps (v), (ix) and/or (xii), wherein in the separation step (vi) (**34**) sulfuric acid is added to the purified metals (**36**) to remove calcium, hydrochloric acid is recovered by distillation for recovery or recycling into the process, a gypsum product (**30**) is precipitated for recovery, and gold metal is separated by adsorption or other method and recovered by electrowinning or reduction (**40**), optionally with hydrogen generated by the hydrogen generator (**12**) of step (i) or further optionally by brine electrolysis **(56).**

Alternatively in the case where the feedstock is a nickel sulfide flotation concentrate containing gold and PGMs, more particularly the process may consist of the following steps:
(A) performing steps (i) to (iv), (vi) to (viii) and (x), and optionally steps (v), (ix) and/or (xii), to generate a gold/PGM-rich siliceous residue after step (x);
(B) heat-treating the gold/PGM-rich siliceous residue from step (x) using hydrogen generated by the hydrogen generator (**12**) of step (i) and optionally capturing CO₂ from the heat-treatment using amines or other suitable scrubbing agents as per step (v), and optionally recovering sulfur by sublimation;
(C) repeating steps (ii) to (iv), (vi) to (viii) and (x), and optionally steps (v), (ix) and/or (xii), but using a non-oxidative HCI leach in step (ii), to yield a gold/PGM-rich siliceous residue after repeated step (x), and to remove gangue and base metals in repeated step (vii), wherein in the separation step (vi) (**34**), hydrochloric acid is recovered by distillation for recovery or recycling into the process, a gypsum product is precipitated for recovery, and base metals are recovered into an intermediate product for further processing by recycling into step (A);
(D) subjecting the gold/PGM-rich siliceous residue of (D) to oxidative HCI leaching in step (ii) with oxidizing reagent produced via the hydrogen generator (**12**) of step (i), or optionally by brine electrolysis **(56),** followed by repeating steps (iii) to (iv), (vi) to (viii) and (x), and optionally steps (v), (ix) and/or (xii), wherein after step (vi) (**34**), hydrochloric acid is recovered by distillation or direct recycling of solution into step (C) for recovery or recycling into the process, a gypsum product (**30**) is precipitated for recovery, and after separation by ion-exchange, solvent extraction or other suitable methods, gold and PGM metals are recovered by reduction (**40**), optionally with hydrogen generated by the hydrogen generator (**12**) of step (i) or further optionally by brine electrolysis **(56).**

Optionally, in either or both of (A), (C) or (D) above, step (iv) may be followed by a secondary neutralisation step by addition of limestone and/or hydrated or dry lime to produce a slurry comprising a nickel-cobalt/iron mixed hydroxide precipitate and gypsum.

As indicated in the processes above, there is an optional additional inclusion in the process of a brine electrolyser (**56**), to produce reagents for use in the leach or metals recovery unit processes, or for sale, including using renewable energy or waste sources for the reagent generation.

The feed material ore, concentrate, or residue may be initially processed by crushing, milling or may be as-mined. Alternatively, or in addition, the feed material may be subjected to a beneficiation step to produce an intermediate ore product for providing to the reaction vessel. The beneficiation step may be performed by a combination of crushing, grinding, screening, sizing, classification, magnetic separation, electrostatic separation, froth flotation or gravity separation thereby to concentrate the valuable metals or reject a gangue component, or by other means of beneficiation known to those skilled in the art.

The heat treatment may be performed at from or about 80 - 750 ºC for up to 120 minutes, typically at from or about 300 - 700 ºC for 10 to 30 minutes, under oxidizing, neutral or reducing conditions, to remove volatile components from the solid residue, optionally including sulfur, and reduce or negate any preg-robbing attributes of the material, whilst rendering refractory mineral phases such as PGM-bearing minerals or silver jarosites suitable for recovery by subsequent leaching.

An additional second heat-treatment may be performed at from or about 500 - 1000 ºC for up to 120 minutes, typically at from or about 700 - 1000 ºC for 30 to 120 minutes, under oxidizing, neutral or reducing conditions, to condition saleable metals to be soluble in chloride leaching medium.

A third additional heat-treatment may be performed at from or about 100 - 600 ºC for up to 240 minutes, typically at from or about 100 - 400 ºC for 60 - 180 minutes, under oxidizing, neutral or reducing conditions, to further condition saleable metals to be soluble in chloride leaching medium.

The thermal processes may be performed as individual steps of a sequential thermal treatment process, or as one combined step. The thermal processes may be fired by hydrogen generated by the hydrogen generator (**12**) of step (i), by liquid natural gas or another hydrocarbon fuel, by renewable electricity or a combination thereof. Hydrogen generated by the hydrogen generator (**12**) of step (i), from a hydrocarbon fuel or from syngas may be used to provide the reducing atmosphere if required.

### BRIEF DESCRIPTION OF THE DRAWINGS

The invention will now be further described, by way of example, with reference to the accompanying drawings.
- **Figure 1**: is a simplified block flowsheet diagram of a generic embodiment of the process of the invention;
- **Figure 2**: is a simplified block flowsheet diagram illustrating further detail of one specific example of the process of the invention for extraction of valuable elements from a primary nickel sulfide flotation concentrate;
- **Figure 3**: is a simplified block flowsheet diagram illustrating further detail of one specific example of the process of the invention for extraction of valuable elements from a primary nickel oxide ore and sulfide concentrate;
- **Figure 4**: is a simplified block flowsheet diagram illustrating further detail of one specific example of the process of the invention for extraction of valuable elements from a primary nickel oxide ore;
- **Figure 5**: is a simplified block flowsheet diagram illustrating further detail of one specific example of the process of the invention for extraction of valuable elements from a copper-gold-silver sulfide concentrate;
- **Figure 6**: is a simplified block flowsheet diagram illustrating further detail of one specific example of the process of the invention for extraction of valuable elements from a gold-silver sulfide concentrate;
- **Figure 7**: is a simplified block flowsheet diagram illustrating further detail of one specific example of the process of the invention for extraction of valuable elements from a gold-silver-rich leach residue;
- **Figure 8**: is a simplified block flowsheet diagram illustrating further detail of one specific example of the process of the invention for extraction of valuable elements from a gold-rich leach residue;
- **Figure 9**: is a simplified block flowsheet diagram illustrating further detail of one specific example of the process of the invention for extraction of valuable elements from a primary nickel-PGM sulfide concentrate;
- **Figure 10**: is a simplified block flowsheet diagram illustrating further detail of one specific example of the process of the invention for extraction of valuable elements from a PGM-rich leach residue;
- **Figure 11**: is a chart depicting the time-dependent results of an experiment targeting the precipitation from HCI preleach liquor;
- **Figure 12**: is a simplified block flowsheet diagram illustrating further detail of the process of Figure 10;
- **Figure 13**: shows the potential thermodynamics for a process of direct iron reduction with hydrogen;
- **Figure 14**: is a simplified block flowsheet diagram illustrating further detail of one specific example of the process of the invention for extraction of valuable elements from a PGM-rich leach residue, showing further detail of metals recovery from the gypsum and iron oxide products; and
- **Figure 15**: shows the dependence of metals solubility on pH value⁷.

### DETAILED DESCRIPTION OF THE INVENTION

This invention relates to a hydrometallurgical process for extracting and recovering valuable metals contained within metalliferous minerals including ores, concentrates and other materials and generation of useful by-products including sulfur, calcium, oxygen, carbon and hydrogen, wherein the process comprises the use of a hydrogen generator, such as an water electrolyser, hydrocarbon pyrolyser or reformer to produce hydrogen, and optionally carbon and oxygen integrated into a single circuit that converts the CO₂ and SO₂ pollutants that would be emitted by the conventional pyrometallurgical process into useful by-products. The process further converts iron-rich waste from the process into "green steel" or a precursor thereof. In particular, the process may be integrated into one or more existing valuable element extraction processes. In a further possible embodiment of the invention, use of a brine electrolyser may be included in the process to produce reagents such as chlorine, sodium hypochlorite, sodium chlorate, hydrochloric acid or caustic soda, or their halogen or alkali metal analogues, for use in the leach steps and/or in the metals recovery processes, or which may be recovered for sale. Preferably the water and brine electrolysers would utilise renewable energy sources including wind and solar resources.

Examples of by-products are exemplified herein, and include hydrogen and oxygen gases, and chemical derivatives including gypsum, which is a cement binder building material and additive to structural ground support paste used in undergound mining; methanol, which is a chemical building block for hundreds of everyday products including plastics, paints, car parts and construction materials and which is also a clean energy resource used to fuel cars, trucks, buses, ships, fuel cells, boilers and cooking stoves, and carbon products, including carbon black, graphite, graphene and carbon nanotubes, as well as methanol.

"Green steel" means steel that has been produced using hydrogen rather than coal in the production process, thereby significantly reducing the carbon footprint for production of such steel. The production process preferably utilises renewable energy sources including wind and solar resources in the production process.

The following description of the invention is provided as an enabling teaching of the invention, is illustrative of the principles of the invention and is not intended to limit the scope of the invention. It will be understood that changes can be made to the embodiment/s depicted and described, while still attaining beneficial results of the present invention. Furthermore, it will be understood that some benefits of the present invention can be attained by selecting some of the features of the present invention without utilising other features. Accordingly, those skilled in the art will recognise that modifications and adaptations to the present invention are possible and can even be desirable in certain circumstances, and are a part of the present invention.

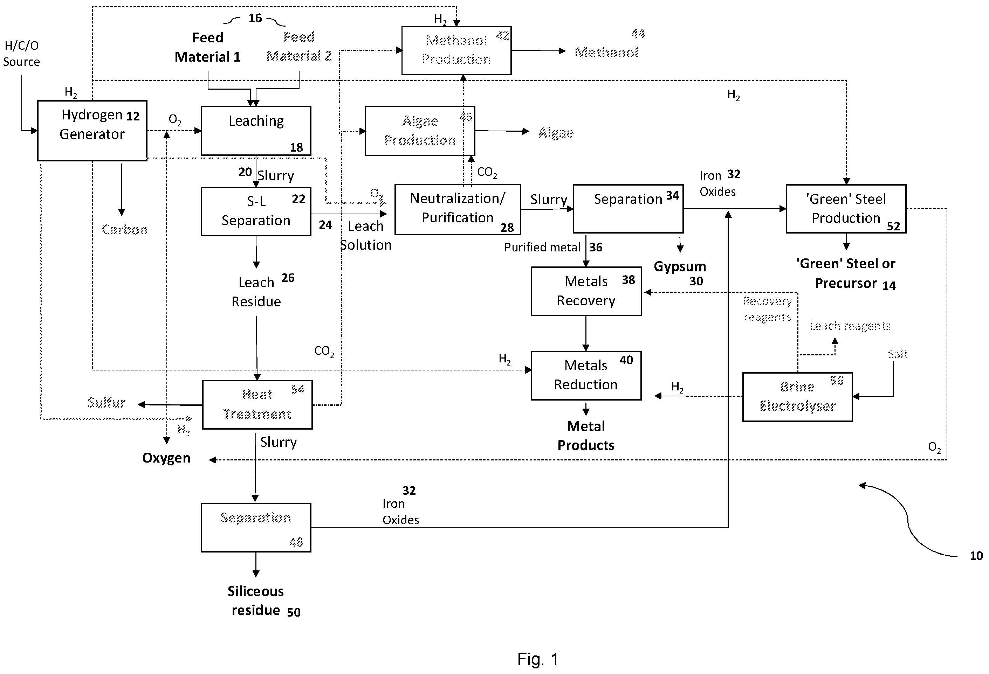

As illustrated in Figure 1, the generic process of the invention (**10**) comprises integration of the hydrogen and oxygen products generated by a step of hydrogen generation, including through electrolysis of water, hydrocarbon pyrolysis or reforming (**12**), into a single circuit, that converts the CO₂ and SO₂ pollutants that would be emitted using conventional pyrometallurgical processing, into useful by-products, while converting iron-rich waste into green steel or a precursor (**14**) and metals into refined products. The first step comprises subjecting a feed material or optionally a blend of feed materials (**16**), which may be a sulfide or other concentrated ore, an oxide or laterite ore, a leach residue or a pre-conditioned leach residue, or any combination thereof, to a leaching step (**18**) under pressure and/or atmospheric conditions and oxidative, neutral or reductive conditions, to produce a product slurry (**20**) that is separated (**22**) into streams comprising valuable metals and other elements in solution (**24**) for recovery and a leach residue (**26**) containing valuable metals and other elements for recovery.

The feed material or blend of feed materials to be processed contain one or more valuable metals or elements comprising or consisting of: precious metals selected from a group comprising or consisting of platinum group metals (PGMs) i.e. platinum, palladium, rhodium, iridium, ruthenium, osmium, gold and silver; base metals selected from a group comprising or consisting of aluminum, copper, lead, nickel, cobalt, tin, tungsten, zinc, cadmium and manganese, but most particularly nickel, cobalt, copper and zinc; and optionally rare elements selected from a group comprising or consisting of rare earth elements, lithium, germanium, gallium, indium, scandium and other nominal valuable metals that may be worth recovering, including uranium, thorium, molybdenum and vanadium.

In particular, the process steps of the invention described above are set out in more detail below and as depicted in the block flow diagram of Figure 1.

The process comprises or consists of the following steps:
(i) generating hydrogen and optionally carbon and oxygen products with the use of a hydrogen generator (**12**), including by electrolysis of water or hydrocarbon pyrolysis or reforming, including with the use of renewable energy or waste sources;
(ii) leaching (**18**) the feed material or the blend of feed materials (**16**), selected from a group comprising or consisting of a sulfide or other concentrated ore, an oxide or laterite ore, a leach residue or a pre-conditioned leach residue, or any combination thereof, under pressure and/or atmospheric conditions and oxidative, neutral or reductive conditions to generate a slurry (**20**) comprising metal sulfates and other valuable elements in solution (**24**) and a solid leach residue (**26**) comprising valuable metals and other valuable elements, in particular, where the feed material or blend of feed materials (**16**) is in the form of a mineral sulfide concentrate, pressure or atmospheric oxidative leaching (**18**) the feed material or blend (**16**) to generate a slurry (**20**) comprising metal sulfates and other valuable elements in solution (**24**) and a leach residue (**26**) comprising valuable metals and other valuable elements;
(iii) separating (**22**) using using filtration, thickening, centrifugation/cycloning, particle size separation techniques, gravity separation, electrostatic separation, or other standard physical separation methods, the solid leach residue (**26**) from the solution (**24**) in the leach slurry (**20**);
(iv) neutralising and purifying (**28**), by addition of limestone and optionally air enriched with oxygen generated from the electrolysis (**12**), the separated solution (**24**), thereby to form a slurry comprising solid gypsum (**30**) and iron oxide (**32**) products and releasing carbon dioxide;
(v) optionally, capturing released carbon dioxide produced during the neutralising and purifying step (**28**) further optionally using scrubbing agents including amines;
(vi) separating (**34**) the solid gypsum (**30**) and iron oxide (**32**) products using filtration, thickening, centrifugation/cycloning, particle size separation techniques, gravity separation, electrostatic separation, or other standard separation methods from each other and from the purified metals (**36**);
(vii) recovering (**38**) the purified metals (**36**) after separation including by solvent extraction, ion exchange, adsorption, precipitation, cementation, electrowinning or reduction (**40**);
(viii) optionally reacting (**42**) carbon dioxide produced or captured, including with the use of scrubbing agents, during the neutralising and purifying step (**28**) with hydrogen generated by the hydrogen generator (**12**) to form methanol (**44**) for sale, storage, or recycling into step (i), including with the use of a process as disclosed in US patent publication no. US20170166503A1 or other known processes;
(ix) optionally, alternatively or in addition, utilising the carbon dioxide produced or captured, including with the use of scrubbing agents, during the neutralising and purifying step (**28**) in an algal production system (**46**);
(x) recovering remaining iron oxide (**32**) from the solid leach residue (**26**), of step (iii), including optionally subjecting the solid leach residue (**26**) to heat treatment (**54**) under reducing, neutral or oxidising conditions to form a heat-treated calcine residue, followed by an additional separation (**48**) using filtration, thickening, centrifugation/cycloning, particle size separation techniques, gravity separation, magnetic, electrostatic separation, or other standard separation methods, of the solid iron oxide (**32**) from the calcine residue, leaving a remaining siliceous residue (**50**) optionally comprising valuable metals and other elements for further purification;
(xi) reacting (**52**) the separated iron oxide products (**32**) from step (vi) and step (x) including by a molten salt electrolysis route (such as that described in US Patent No. US8764962B2) to produce oxygen, or alternatively by hydrogen reduction using hydrogen generated by the hydrogen generator (**12**), to produce Direct Reduced Iron (DRI) or sponge iron, thereby forming "green steel" or a precursor (**14**) and optionally oxygen, depending on the "green steel" or precursor production process used; and
(xii) optionally capturing released oxygen, when produced in step (xi), for reuse in the hydrometallurgical process.

Oxygen generated from water electrolysis (**12**) when used in step (i), and/or if generated in the iron reduction step (xi) may be used in step (ii).

In step (vii), the reduction (**40**) may be performed using hydrogen from the hydrogen generation step (**12**).

In particular, in step (viii), the methanol may be recycled to the hydrogen generation step (i) to generate carbon, including for processing to form a stable saleable by-product such as carbon black, graphite, graphene or carbon nanotubes, as well as hydrogen and oxygen for use in the hydrometallurgical processes.

For step (xi), the reaction process may include the use of renewable energy sources to produce the "green steel" or precursor.

For step (ii), in the case where significant jarosite or basic ferric sulfate is present in the solid residue (**26**), the leach slurry (**20**) is optionally subjected to a conditioning step to leach iron sulfates into solution.

Optionally, step (iv) may further include a step of partial reduction of the slurry using hydrogen produced by the hydrogen generator (**12**) or another reductant, to form one or more magnetic iron phases that can be separated from the gypsum (**30**) by magnetic separation.

Recovery (**38**) of the purified metals (**36**) of step (vii) may be performed between step (iii) and step (iv), rather than after step (iv) in the case where the purified metal (**36**) is copper.

Depending on the feed material(s) used, further steps may be incorporated into the above process of the invention. For example, more particularly:
in the case where the feedstock is a copper-gold-silver sulfide concentrate the process may consist of the following steps:
a) performing steps (i) to (iv), (vi) to (viii) and (x), and optionally steps (v), (ix) and/or (xii), but recovery of copper in step (vii) between steps (iii) and (iv), rather than after step (iv), optionally preceded by neutralisation of free acid using limestone, forming a gypsum product for separation and recovery, and optionally performing an additional step of heat-treating (**54**) the separated leach residue (**26**) from the pressure or atmospheric oxidation leaching (**18**) after step (iii), thereby to to volatilize any carbonaceous minerals, optionally capturing CO₂ from the heat-treatment (**54**) using amines or other suitable scrubbing agents as per step (v), and optionally recovering residual sulfur by sublimation and condensation;
b) repeating steps (ii) to (iv), (vi) to (viii) and (x), and optionally steps (v), (ix) and/or (xii), but using a non-oxidative HCl leach in step (ii), to yield a gold-rich siliceous residue after repeated step (x), and to recover silver metal in repeated step (vii), wherein in the separation step (vi) (**34**), hydrochloric acid is recovered by distillation for recovery or recycling into the process, the gypsum product (**30**) is precipitated for recovery, and silver metal (**36**) is separated by adsorption or other method and recovered (**38**) by electrowinning or reduction (**40**), optionally with hydrogen generated by the the hydrogen generator (**12**) of step (i) or further optionally by brine electrolysis **(56);**
c) subjecting the gold-rich siliceous residue of step (b) to oxidative HCI leaching in step (ii) with oxidizing leach reagent produced via the hydrogen generator (**12**) of step (i) or optionally by brine electrolysis **(56),** followed by repeating steps (iii) to (iv), (vi) to (viii) and (x), and optionally steps (v), (ix) and/or (xii), wherein in the separation step (vi) (**34**) sulfuric acid is added to the purified metals (**36**) to remove calcium, hydrochloric acid is recovered by distillation for recovery or recycling into the process, a gypsum product (**30**) is precipitated for recovery, and gold metal is separated by adsorption or other method and recovered by electrowinning or reduction (**40**), optionally with hydrogen generated by the hydrogen generator (**12**) of step (i) or further optionally by brine electrolysis **(56).**

Alternatively in the case where the feedstock is a nickel sulfide flotation concentrate containing gold and PGMs, more particularly the process may consist of the following steps:
(A) performing steps (i) to (iv), (vi) to (viii) and (x), and optionally steps (v), (ix) and/or (xii), to generate a gold/PGM-rich siliceous residue after step (x);
(B) heat-treating the gold/PGM-rich siliceous residue from step (x) using hydrogen generated by the hydrogen generator (**12**) of step (i) and optionally capturing CO₂ from the heat-treatment using amines or other suitable scrubbing agents as per step (v), and optionally recovering sulfur by sublimation;
(C) repeating steps (ii) to (iv), (vi) to (viii) and (x), and optionally steps (v), (ix) and/or (xii), but using a non-oxidative HCl leach in step (ii), to yield a gold/PGM-rich siliceous residue after repeated step (x), and to remove gangue and base metals in repeated step (vii), wherein in the separation step (vi) (**34**), hydrochloric acid is recovered by distillation for recovery or recycling into the process, a gypsum product is precipitated for recovery, and base metals are recovered into an intermediate product for further processing by recycling into step (A);
(D) subjecting the gold/PGM-rich siliceous residue of (D) to oxidative HCI leaching in step (ii) with oxidizing reagent produced via the hydrogen generator (**12**) of step (i), or optionally by brine electrolysis **(56),** followed by repeating steps (iii) to (iv), (vi) to (viii) and (x), and optionally steps (v), (ix) and/or (xii), wherein after step (vi) (**34**), hydrochloric acid is recovered by distillation or direct recycling of solution into step (C) for recovery or recycling into the process, a gypsum product (**30**) is precipitated for recovery, and after separation by ion-exchange, solvent extraction or other suitable methods, gold and PGM metals are recovered by reduction (**40**), optionally with hydrogen generated by the hydrogen generator (**12**) of step (i) or further optionally by brine electrolysis **(56).**

Optionally, in either or both of (A), (C) or (D) above, step (iv) may be followed by a secondary neutralisation step by addition of limestone and/or hydrated or dry lime to produce a slurry comprising a nickel-cobalt/iron mixed hydroxide precipitate and gypsum.

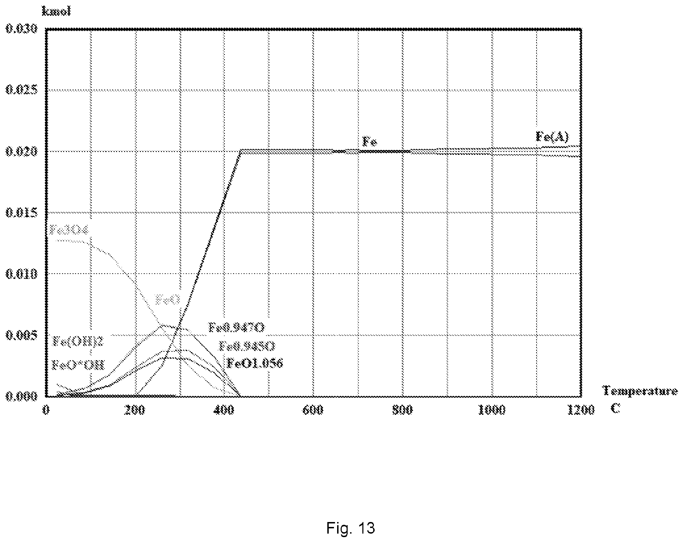

In the case of using the conventional hydrogen reduction route that produces DRI, the potential thermodynamics are shown in Figure 13 for direct iron reduction with hydrogen. The process is as set out in the below equations, where carbon monoxide is used for conventional carbon-based iron/steel production, and hydrogen generated by electrolysis, pyrolysis or reforming is used for hydrogen-based iron/steel production:

3 Fe₂O₃ + CO/H₂ = 2 Fe₃O₄ + CO₂/H₂O (1)

Fe₃O₄ + CO/H₂ = 3 FeO + CO₂/H₂O (2)

FeO + CO/H₂ = Fe + CO₂/H₂O (3)

As indicated in the processes above, there is an optional additional inclusion in the process of a brine electrolyser (**56**), to produce reagents for use in the leach or metals recovery unit processes, or for sale, including using renewable energy or waste sources for the reagent generation. The brine shown in Example 11 below is sodium chloride,but may alternatively be another saline brine. "Saline brine" is a high-concentration solution of salt (usually chloride, with counterions comprising metals such as sodium, potassium, magnesium, calcium, aluminium, iron or other cations) in water.

In the chlor-alkali configuration, reagents including chlorine gas, hydrochloric acid, hypochlorite solution or salts are produced, in addition to hydrogen gas, which can then be used within the process, such as disclosed in Example 9 below. In an alternative or parallel chlorate configuration, an oxidising reagent such as sodium chlorate is produced in addition to the hydrogen gas which is used within the process.

It is to be appreciated that quicklime or hydrated lime could be used in complete or partial replacement of limestone for the neutralisation and purification step (iv).

The feed material ore, concentrate, or residue may be initially processed by crushing, milling or may be as-mined. Alternatively, or in addition, the feed material may be subjected to a beneficiation step to produce an intermediate ore product for providing to the reaction vessel. The beneficiation step may be performed by a combination of crushing, grinding, screening, sizing, classification, magnetic separation, electrostatic separation, froth flotation or gravity separation thereby to concentrate the valuable metals or reject a gangue component, or by other means of beneficiation known to those skilled in the art.

The heat-treatment may be performed at from or about 80 - 750 ºC for up to 120 minutes, typically at from or about 300 - 700 ºC for 10 to 30 minutes, under oxidizing, neutral or reducing conditions, to remove volatile components from the solid residue, optionally including sulfur, and reduce or negate any preg-robbing attributes of the material, whilst rendering refractory mineral phases such as PGM-bearing minerals or silver jarosites suitable for recovery by subsequent leaching.

An additional second heat-treatment may be performed at from or about 500 - 1000 ºC for up to 120 minutes, typically at from or about 700 - 1000 ºC for 30 to 120 minutes, under oxidizing, neutral or reducing conditions, to condition saleable metals to be soluble in chloride leaching medium.

A third additional heat-treatment may be performed at from or about 100 - 600 ºC for up to 240 minutes, typically at from or about 100 - 400 ºC for 60 - 180 minutes, under oxidizing, neutral or reducing conditions, to further condition saleable metals to be soluble in chloride leaching medium.

The thermal processes may be performed as individual steps of a sequential thermal treatment process, or as one combined step. The thermal processes may be fired by hydrogen generated by the hydrogen generator (**12**) of step (i), by liquid natural gas or another hydrocarbon fuel, by renewable electricity or a combination thereof. Hydrogen generated by the hydrogen generator (**12**) of step (i), from a hydrocarbon fuel or from syngas may be used to provide the reducing atmosphere if required.

The terms "element", "mineral" and "metal" are used interchangeably in this specification.

"Saleable metals", "saleable elements", "valuable metals", "value metals" or "value elements" are used interchangeably and mean any element or metal that is able to generate a revenue through sale of the element or metal in metallic form or as a salt or precipitate of the metal or element.

"PGMs" mean ruthenium (Ru), rhodium (Rh), palladium (Pd), osmium (Os), iridium (Ir), and platinum (Pt).

"Precious metals" means gold, (Au), silver (Ag), and PGMs.

As used herein, "base metals" means industrial non-ferrous metals excluding the precious metals, and including aluminum, copper, lead, nickel, tin, tungsten, zinc, cadmium and manganese. "Rare earth elements" or REEs means a group of chemically similar metallic elements comprising the lanthanide series (fifteen elements), scandium and yttrium. "Rare metals" means a group of metals including the rare earths, lithium, germanium, gallium, indium, scandium and other nominal valuable metals that may be worth recovering, including uranium, thorium, molybdenum and vanadium.

"Pressure oxidation leach" or POX means a process of sulfuric acid (H₂SO₄) leaching comprising either or a combination of a conventional atmospheric (20-100 °C), low (100-130 °C) medium (130-220 °C) or high (220-260 °C) temperature and pressure leach (roughly 35 bar or 510 psi), with addition of oxygen to generate sulfuric acid from sulfide minerals in the feed material, augmented with sulfuric acid addition when contained sulfur in the feed materials is low.

"Pressure acid leach" or PAL means a process of sulfuric acid (H₂SO₄) leaching comprising either or a combination of a conventional atmospheric (20-100 °C), low (100-130 °C) medium (130-220 °C) or high (220-260 °C - HPAL) temperature and pressure leach (roughly 35 bar or 510 psi), wherein the sulfuric acid is added to the process.

The term "conditioning" means a conventional atmospheric (20-100 °C) or low (100-130 °C) temperature and pressure leach with or without the addition of sulfuric acid.

A "pre-conditioned leach residue" means a leach residue previously treated by means of a hot acidic conditioning step, i.e. a conventional atmospheric (20-100 °C) or low (100-130 °C) temperature and pressure leach using sulphuric acid, or a hot alkaline conditioning step, i.e. a lime boil at a pH value of 10 - 14.

"HCI leach" denotes the process whereby elements are leached from a solid feed by hydrochloric acid or acidified saline brine without addition of an oxidising reagent such as chlorine gas or a reductant, or with addition of a reducing agent such as metal powders, sulfur dioxide producing chemicals, organic reagents, sulfide compounds or concentrates to achieve an oxidation-reduction potential (ORP) setpoint. The leach is performed at atmospheric pressure and at a temperature of from about 60 °C to 90 °C, more preferably at about 70 °C.

"Oxidative HCI leach" means a conventional atmospheric (20-100 °C) or low (100-130 °C) temperature and pressure leach under oxidising conditions whereby elements are leached from a solid feed by hydrochloric acid (HCI) or saline brine in conjunction with an oxidising agent such as chlorine, hypochlorite, nitric compounds, hydrogen peroxide or others known to those skilled in the art.

An "atmospheric leach step" means a conventional atmospheric (20-100°C), temperature and pressure H₂SO₄ leach step.

### EXAMPLES

Typically, different combinations of techniques are required, depending on specific feed mineralogy, chemistry and metallurgical response. The following examples are provided to demonstrate the efficacy of the described technique that have been brought to bear to treat specific feed materials. These examples should in no way be interpreted to in any way limit the scope of the invention, and are for illustration only.

### Example 1

### Treatment of a primary nickel sulfide concentrate

In this example, a nickeliferous flotation concentrate containing nickel, cobalt and copper and iron is subjected to sulfuric acid pressure oxidation ("POX") leach using oxygen generated by a hydrogen generator including by electrolysis of water or hydrocarbon pyrolysis or reforming. Non-limiting examples of methods of hydrogen generation that could be used are known to those skilled in the art^{1, 2, 3, and 4}. The POX slurry is filtered and washed and the solid POX residue containing iron oxide is physically separated from the slurry for recovery of iron oxide. Most of the iron in the POX residue is typically in the form of iron oxide (hematite or goethite) already. However, if significant sulfate minerals are present, the POX residue slurry can be subjected to an additional conditioning step to remove sulfates prior to filtration of the slurry. The remaining pregnant leach solution after removal of the solid residue is subjected to solvent extraction for recovery of copper, optionally preceded by neutralisation of free acid using limestone, forming a gypsum product for separation and recovery. The remaining solution is then neutralised and purified by addition of limestone and air enriched with oxygen generated by the hydrogen generator to remove dissolved iron and sulfate to form solid gypsum and iron oxide products, which are separated from the solution using physical separation methods. Carbon dioxide generated from the neutralisation step is captured, optionally using amines or other suitable scrubbing agents, and then reacted with hydrogen from the hydrogen generator, forming a methanol product. If desired, the recycled carbon dioxide generated from the neutralisation step can be fed into an algal production step^{5, 6, and 7}. Iron oxide is converted to "green steel" or a "green steel" precursor using hydrogen from the hydrogen generator. Nickel and cobalt metals are recovered from the purified pregnant leach solution after gypsum and iron oxide product removal by reduction with hydrogen generated by the hydrogen generator. The steps of physical separation in this example can be performed by filtration, thickening, centrifugation or other standard methods.

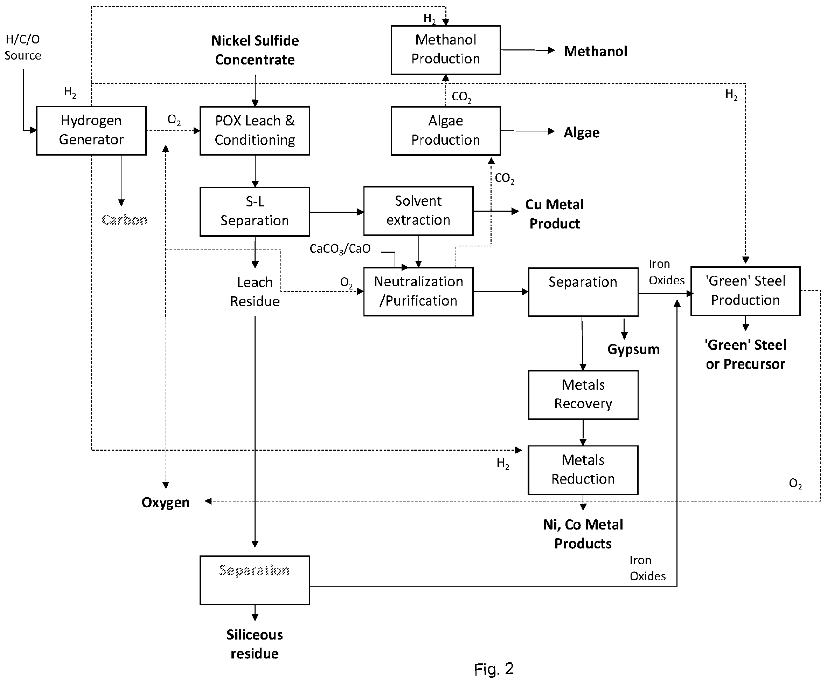

Figure 2 is a simplified block flowsheet diagram illustrating more detail of this one example of implementation of this invention.

Pressure oxidation tests were completed in a 2 L laboratory batch autoclave under different conditions on samples of two nickel sulfide concentrates with different mass ratios of Fe:Ni, respectively 1.6 and 3.1. The salient results are summarised in Table 1. Extractions of Ni, Cu and Co into solution were >97% in both tests. The residue from Test 1 assayed ~65% Fe, falling within the industry standard NYMEX traded 62% Fe specification, indicating that this iron oxide product may be converted to "green steel" or a "green steel" precursor using hydrogen from a hydrogen generator.

**Table 1 - Pressure oxidation of a primary nickel sulfide concentrate**

| Head Assay, % | Co | Cu | Fe | Ni | S |
|---|---|---|---|---|---|
| Concentrate 1 | 1.9 | 3.2 | 33.4 | 20.5 | 30.8 |
| Concentrate 2 | 1.3 | 2.1 | 41.7 | 13.6 | 32.8 |
| | | | | | |

| Residue Assay, % | Co | Cu | Fe | Ni | S |
|---|---|---|---|---|---|
| Concentrate 1 | 0.0 | 0.0 | 64.5 | 0.2 | 1.5 |
| Concentrate 2 | 0.0 | 0.0 | 34.0 | 0.1 | 20.9 |
| | | | | | |

| Extraction, % | Co | Cu | Fe | Ni | S |
|---|---|---|---|---|---|
| Concentrate 1 | 100 | 100 | 2 | 100 | 98 |
| Concentrate 2 | 98 | 97 | 30 | 98 | 79 |

### Example 2

### Treatment of a primary nickel oxide ore and sulfide concentrate

In this example, a blend consisting of a nickel oxide ore and sulfide flotation concentrate containing nickel, cobalt and iron is subjected to sulfuric acid POX leach using oxygen generated by a hydrogen generator as provided in Example 1. The POX slurry is filtered and washed and the solid POX residue containing iron oxide is physically separated from the slurry for the recovery of iron oxide. Most of the iron in the POX residue is typically in the form of iron oxide (hematite or goethite) already. However, if significant sulfate minerals are present, the POX residue slurry can be subjected to an additional acid conditioning step to remove sulfates prior to filtration of the slurry. The remaining pregnant leach solution after removal of the solid POX residue is neutralised and purified by addition of limestone and air enriched with oxygen generated by the hydrogen generator, to remove dissolved iron and sulfate, forming gypsum and iron oxide products which are separated using physical separation methods. Carbon dioxide generated from the neutralisation step is captured, using amines or other suitable scrubbing agents, and reacted with hydrogen generated by the hydrogen generator, forming a methanol product. If desired, the recycled carbon dioxide generated from the neutralisation step can be fed into an algal production step as provided in Example 1. Iron oxide is converted to "green steel" or precursor using hydrogen generated by the hydrogen generator. Nickel and cobalt metals are recovered from the purified pregnant leach solution by reduction with hydrogen generated by the hydrogen generator. The steps of physical separation in this example can be performed by filtration, thickening, centrifugation or other standard methods.

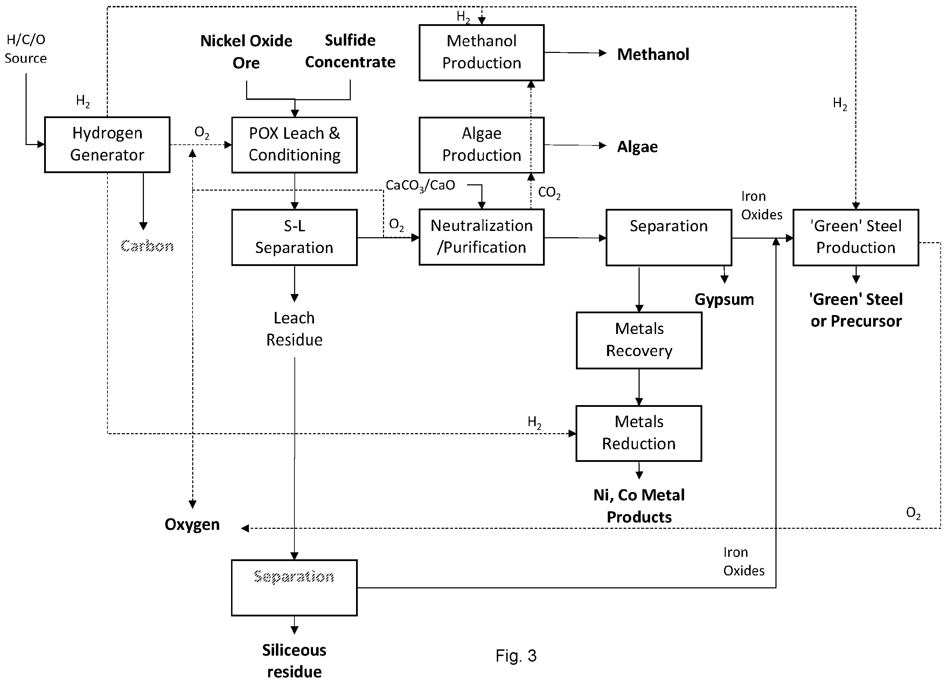

Figure 3 is a simplified block flowsheet diagram illustrating more detail of this one example of implementation of this invention.

### Example 3

### Treatment of a primary nickel oxide ore

In this example, a nickel oxide ore containing nickel, cobalt and iron is subjected to sulfuric acid leaching, typically sulfuric acid leaching under pressure or atmospheric conditions without adjustment of redox potential, for dissolution of the nickel, cobalt and iron, and the filtered and washed solid leach residue is subjected to a physical separation step to effect the recovery of iron oxide into a separate concentrate stream. Most of the iron in the POX residue is typically in the form of iron oxide (hematite or goethite) already. However, if significant sulfate minerals are present, the POX residue slurry can be subjected to an additional acid conditioning step to remove sulfates prior to filtration of the slurry. The remaining pregnant leach solution after separation from the solid residue is neutralised and purified by addition of limestone and air enriched with oxygen generated by a hydrogen generator as provided in Example 1, to remove dissolved iron and sulfate, forming gypsum and iron oxide products, which are separated using physical separation methods. Carbon dioxide generated from the neutralisation step is captured, using amines or other suitable scrubbing agents, and reacted with hydrogen generated by the hydrogen generator, forming a methanol product. If desired, the recycled carbon dioxide generated from the neutralisation step can be fed into an algal production step as provided in Example 1. Iron oxide is converted to "green steel" or precursor using hydrogen generated by the hydrogen generator. Nickel and cobalt metals are recovered from purified pregnant leach solution by reduction with hydrogen generated by the hydrogen generator. The steps of physical separation in this example can be performed by filtration, thickening, centrifugation or other standard methods.

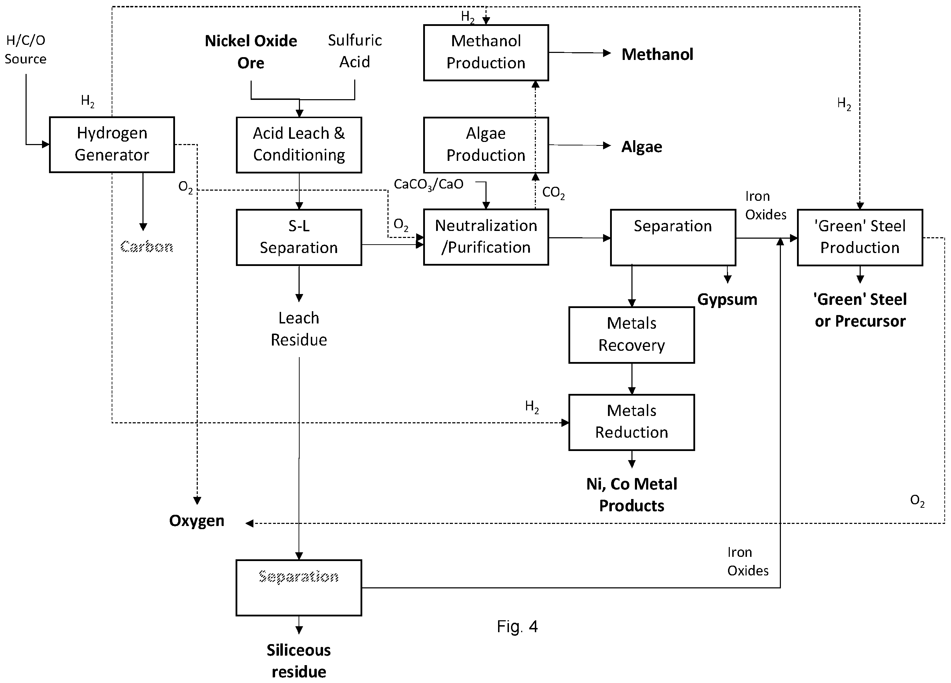

Figure 4 is a simplified block flowsheet diagram illustrating more detail of this one example of implementation of this invention.

### Example 4

### Treatment of a copper-gold-silver sulfide concentrate

In this example, a sulfide flotation concentrate containing copper, gold, silver and iron is subjected to sulfuric acid POX leach using oxygen generated by a hydrogen generator as provided in Example 1. The POX slurry is filtered and washed, and the solid POX residue containing iron oxide is physically separated from the slurry into a separate concentrate for the recovery of iron oxide. Most of the iron in the POX residue is typically in the form of iron oxide (hematite or goethite) already. However, if significant sulfate minerals are present, the POX residue slurry can be subjected to an additional acid conditioning step to remove sulfates prior to filtration of the slurry. The remaining pregnant leach solution after separation from the solid POX residue is subjected to solvent extraction for recovery of copper, optionally preceded by neutralisation of free acid using limestone, forming a gypsum product for separation and recovery. The remaining solution is then neutralised and purified by addition of limestone and air enriched with oxygen generated by the hydrogen generator to remove dissolved iron and sulfate to form solid gypsum and iron oxide products, which are separated from the solution using physical separation methods. Carbon dioxide generated from the neutralisation step is captured, using amines or other suitable scrubbing agents, and reacted with hydrogen from the hydrogen generator, forming a methanol product. If desired, the recycled carbon dioxide generated from the neutralisation step can be fed into an algal production step as provided in Example 1. Iron oxide is converted to "green steel" or precursor using hydrogen generated by the hydrogen generator. In this case, the mild sulfuric acid POX conditions result in the presence of elemental sulfur in the POX residue. Moreover, in this example, graphitic and organic carbonaceous material is also present in the flotation concentrate feed and POX residue. Elemental sulfur is therefore recovered by sublimation in a heat treatment step, wherein carbonaceous material is also converted to carbon dioxide, which is captured and reacted with hydrogen to form a methanol product as described above. If desired, the recycled carbon dioxide generated from the neutralisation step can be fed into an algal production step. Gold and silver metals are recovered from the solid POX leach residue after heat treatment by separate leaching steps illustrated in Examples 6 and/or 7. The steps of physical separation in this example can be performed by filtration, thickening, centrifugation or other standard methods.

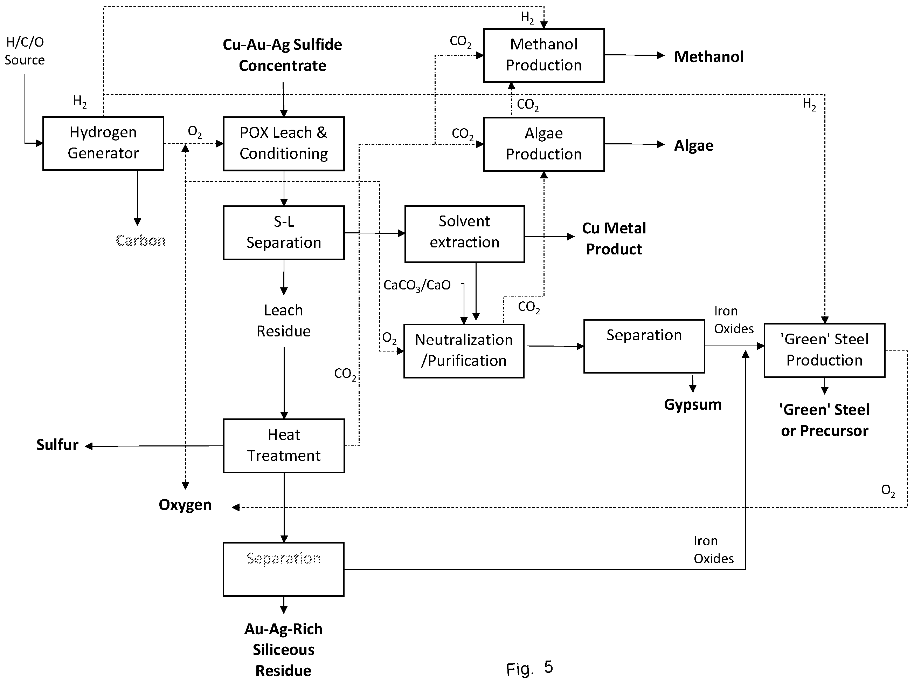

Figure 5 is a simplified block flowsheet diagram illustrating more detail of this one example of implementation of this invention.

### Example 5

### Treatment of a gold-silver sulfide concentrate

In this example, as provided in Example 1, gold-silver sulfide concentrate is subjected to a sulfuric acid POX leach using oxygen generated by a hydrogen generator as provided in Example 1, and the filtered and washed solid POX residue containing iron oxide is separated from the slurry into a separate concentrate for the recovery of iron oxide. Most of the iron in the POX residue is typically in the form of iron oxide (hematite or goethite) already. However, if significant sulfate minerals are present, the POX residue slurry can be subjected to an additional acid conditioning step to remove sulfates prior to filtration of the slurry. The remaining leach solution after separation of the solid POX residue is neutralised and purified by addition of limestone and air enriched with oxygen generated by the hydrogen generator, to remove dissolved iron and sulfate, forming gypsum and iron oxide products, which are separated from the solution using physical and/or chemical separation methods. Carbon dioxide generated from the neutralisation step is captured, using amines or other suitable scrubbing agents, and reacted with hydrogen generated by the hydrogen generator, forming a methanol product. If desired, the recycled carbon dioxide generated from the neutralisation step can be fed into an algal production step as provided in Example 1. Iron oxide is converted to "green steel" or precursor using hydrogen generated by the hydrogen generator. The steps of physical separation in this example can be performed by filtration, thickening, centrifugation or other standard methods.

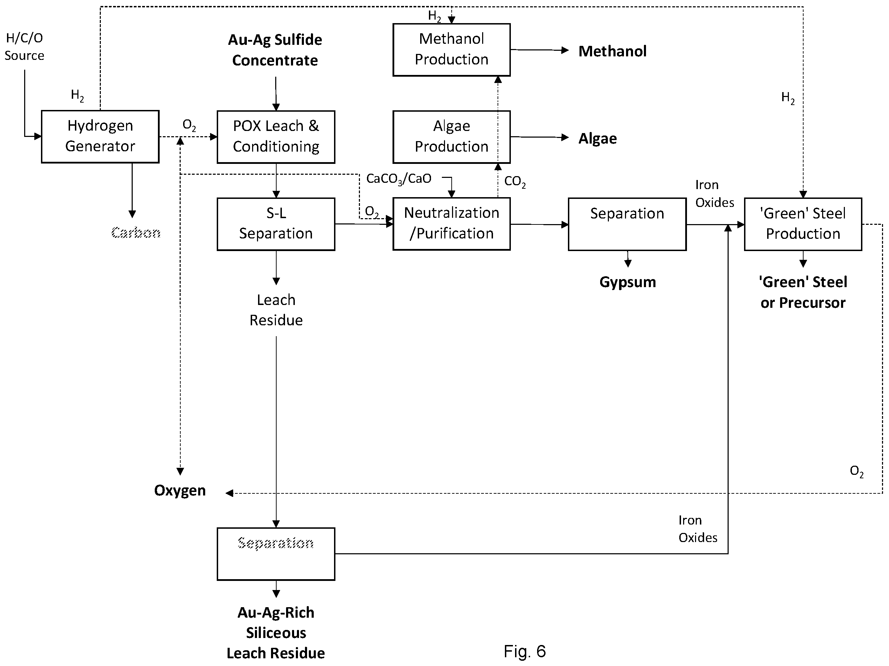

Gold and silver metals are recovered from the solid POX leach residue by a separate leaching step illustrated in Example 6. Figure 6 is a simplified block flowsheet diagram illustrating more detail of this one example of implementation of this invention.

### Example 6

### Treatment of a gold-silver-rich leach residue

In this example, the gold-silver-rich solid POX leach residue from Example 4 and/or Example 5 is subjected to reductive/neutral hydrochloric acid leaching for dissolution of silver and residual iron, and the filtered and washed solid leach residue is subjected to a physical or chemical separation step to effect the recovery of iron oxide into a separate concentrate. The remaining leach solution after separation of the solid leach residue is neutralised and purified by addition of limestone and air enriched with oxygen generated by a hydrogen generator as provided in Example 1, to remove dissolved iron, forming an iron oxide product, which is separated from the solution using physical separation methods. Carbon dioxide generated from the neutralisation step is captured, using amines or other suitable scrubbing agents, and reacted with hydrogen generated by the hydrogen generator, forming a methanol product. If desired, the recycled carbon dioxide generated from the neutralisation step can be fed into an algal production step as provided in Example 1. Hydrochloric acid is recovered by distillation after sulfuric acid addition to the solution which also removes calcium, forming a gypsum product. Iron oxide is converted to "green steel" or precursor using hydrogen from the hydrogen generator. Silver metal purified from the leachate solution after removal of iron oxide, hydrochloric acid and gypsum, by reduction with hydrogen generated by the hydrogen generator. The steps of physical separation in this example can be performed by filtration, thickening, centrifugation or other standard methods.

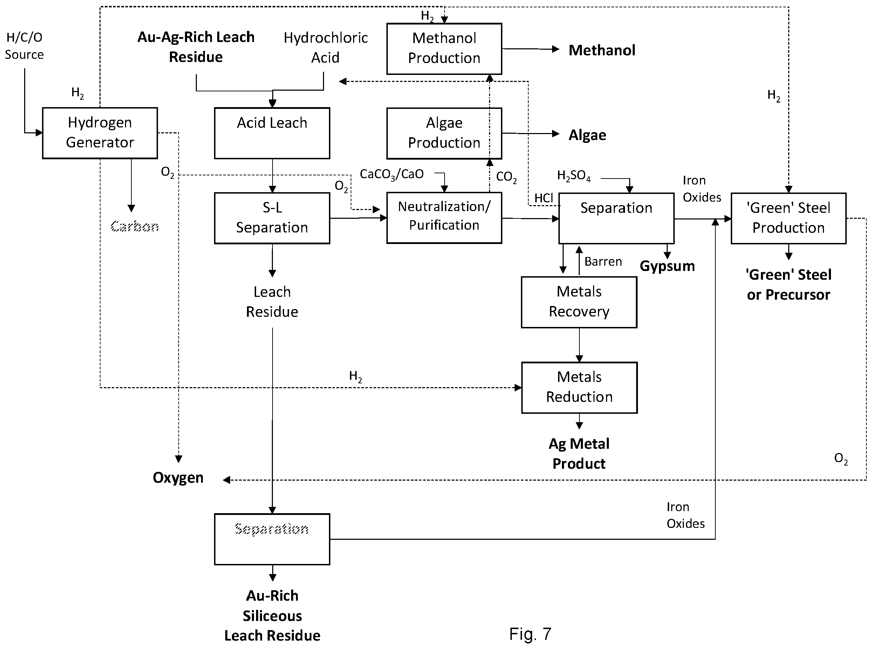

Gold metal is recovered from the solid POX leach residue by a separate leaching step illustrated in Example 7. Figure 7 is a simplified block flowsheet diagram illustrating more detail of this one example of implementation of this invention.

### Example 7

### Treatment of a gold-rich leach residue

In this example, the gold-rich leach residue containing gold and residual iron from Example 6 is subjected to hydrochloric acid leaching using an oxidant such as chlorine generated by a brine electrolyser or hydrogen peroxide derived from oxygen generated by a hydrogen generator as provided in Example 1, and the filtered and washed solid leach residue is subjected to a physical or chemical separation step to effect the recovery of iron oxide into a separate concentrate. The remaining leach solution after separation from the solid leach residue is neutralised and purified by addition of limestone and air enriched with oxygen generated by the hydrogen generator, to remove residual dissolved iron, forming iron oxide product, which is separated using physical separation methods. Carbon dioxide generated from the neutralisation step is captured, using amines or other suitable scrubbing agents, and reacted with hydrogen generated by the hydrogen generator, forming a methanol product. If desired, the recycled carbon dioxide generated from the neutralisation step can be fed into an algal production step as provided in Example 1. Hydrochloric acid is recovered by distillation after sulfuric acid addition, forming a gypsum product. Iron oxide is converted to "green steel" or precursor using hydrogen from the hydrogen generator. Gold metal product is produced from leachate solution after removal of iron oxide, hydrochloric acid and gypsum, by reduction with hydrogen generated by the hydrogen generator. The steps of physical separation in this example can be performed by filtration, thickening, centrifugation or other standard methods.

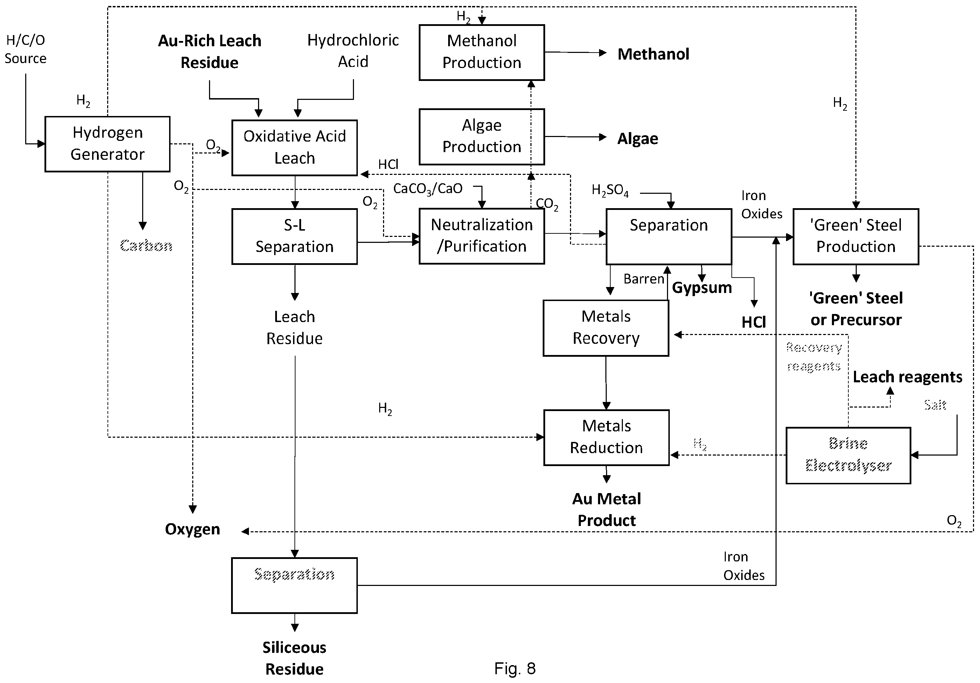

Figure 8 is a simplified block flowsheet diagram illustrating more detail of this one example of implementation of this invention.

### Example 8

### Treatment of a primary nickel-PGM sulfide concentrate

In this example, a flotation concentrate containing gold, PGM (platinum group metals), nickel, cobalt, copper and iron is subjected to sulfuric acid pressure oxidation (POX) leaching using oxygen generated by a hydrogen generator as provided in Example 1, and the filtered and washed solid POX residue is subjected to a physical separation step to effect the recovery of iron oxide into a separate concentrate. Most of the iron in the POX residue is typically in the form of iron oxide (hematite or goethite) already. However, if significant sulfate minerals are present, the POX residue slurry can be subjected to an additional acid conditioning step to remove sulfates prior to filtration of the slurry. The remaining pregnant leach solution after separation of the solid POX residue is subjected to solvent extraction for recovery of copper, optionally preceded by neutralisation of free acid using limestone, forming a gypsum product for separation and recovery. The remaining solution is then neutralised and purified by addition of limestone and air enriched with oxygen generated by the hydrogen generator to remove dissolved iron and sulfate, forming gypsum and iron oxide products, which are separated from the solution using physical separation methods. Carbon dioxide generated from the neutralisation step is captured, using amines or other suitable scrubbing agents, and reacted with hydrogen from the hydrogen generator, forming a methanol product. If desired, the recycled carbon dioxide generated from the neutralisation step can be fed into an algal production step as provided in Example 1. Iron oxide is converted to "green steel" or precursor using hydrogen from the hydrogen generator. Nickel and cobalt metals are recovered from the leachate solution by reduction with hydrogen from the hydrogen generator, after removal of iron oxide. The steps of physical separation in this example can be performed by filtration, thickening, centrifugation or other standard methods.

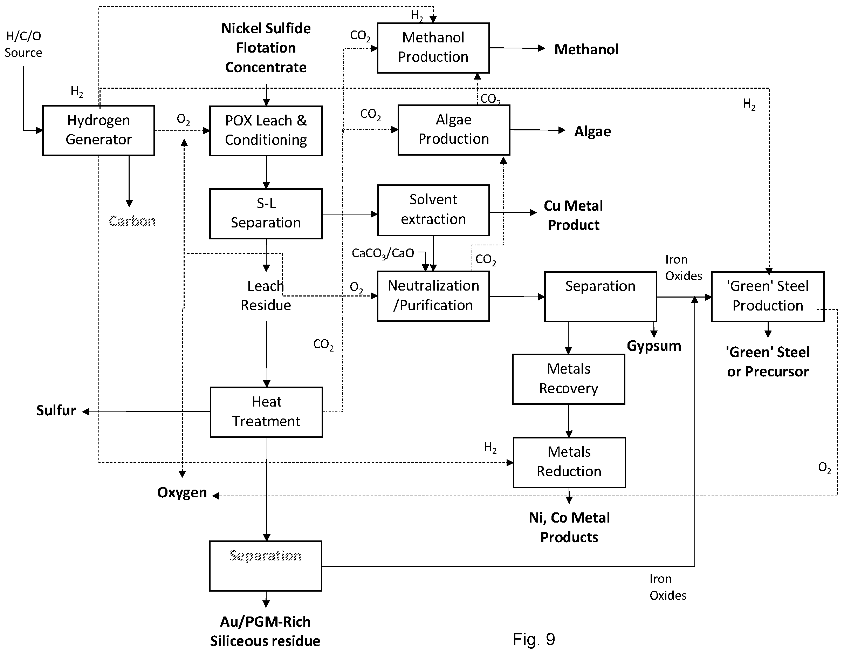

The solid leach residue containing gold, PGM metals, residual iron and elemental sulfur from filtration is subjected to sublimation in a heat treatment pre-conditioning step for recovery of elemental sulfur, wherein carbonaceous material remaining in the leach residue is also converted to carbon dioxide, which is captured, using amines or other suitable scrubbing agents, and reacted with hydrogen generated by a hydrogen generator, forming a methanol product. Gold and PGM metals are recovered from the solid leach residue, which also contains elemental sulfur after the POX leach step, after removal of iron oxide by a separate leaching step illustrated in Example 9. Figure 9 is a simplified block flowsheet diagram illustrating more detail of this one example of implementation of this invention.

### Example 9

### Treatment of a PGM-rich leach residue

In this example, the heat-treated residue from Example 8 is then subjected to hydrochloric acid leaching using using an oxidant such as hydrogen peroxide derived from oxygen generated by the hydrogen generator as provided in Example 1, and the filtered and washed solid leach residue is subjected to a physical or chemical separation step to effect the recovery of iron oxide into a separate concentrate. The remaining leach solution after separation of the solid leach residue is neutralised and purified by addition of limestone and air enriched with oxygen generated by the hydrogen generator, to remove dissolved iron, forming iron oxide product, which is separated using physical separation methods. Carbon dioxide generated from the neutralisation step is captured, using amines or other suitable scrubbing agents, and reacted with hydrogen from the hydrogen generator, forming a methanol product. If desired, the recycled carbon dioxide generated from the neutralisation step can be fed into an algal production step as provided in Example 1. Iron oxide is converted to "green steel" or precusor using hydrogen from the hydrogen generator. PGM and gold metal products are separated from the leach solution after the neutralisation step using standard ion exchange or solvent extraction (IX/SX) techniques, and then recovered from the ion exchange eluate or solvent extraction strip solution by reduction with hydrogen generated by the hydrogen generator. The steps of physical separation in this example can be performed by filtration, thickening, centrifugation or other standard methods.

The steps illustrated in this example may be preceded by the equivalent steps but with a non-oxidising HCI leach, to remove gangue and base metals.

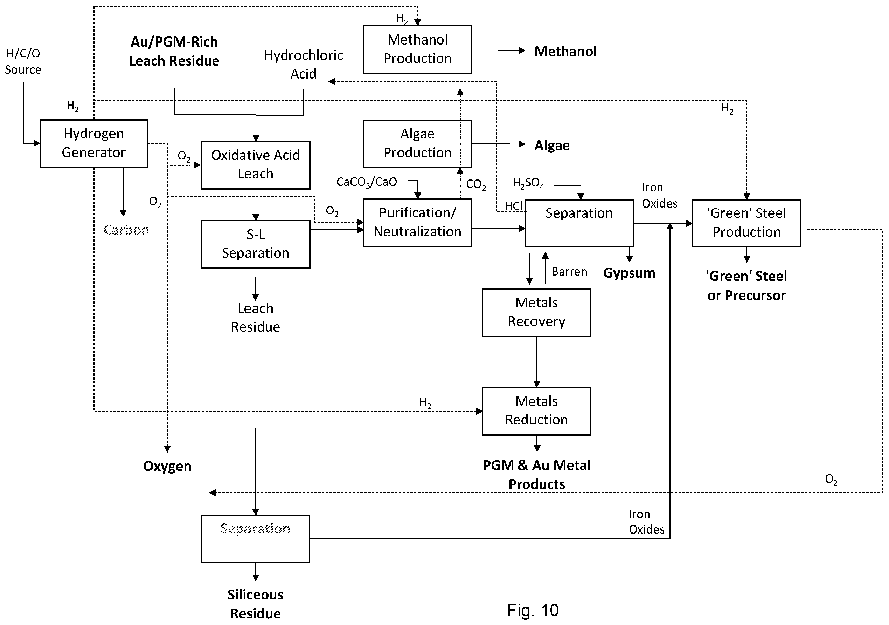

Figure 10 is a simplified block flowsheet diagram illustrating more detail of this one example of implementation of this invention.

A pressure oxidation test was completed in a 2 L laboratory batch autoclave on a sample of primary nickel-PGM sulfide concentrate. The salient results are summarised in Table 2. Extractions of Ni, Cu, Co and S into solution were >95%. The residue assayed ~20% Fe, with Fe extraction into solution of <1%. The residue was heat treated and then subjected to an atmospheric HCI preleach, recovering some 67% of the Fe into solution, along with substantially the remainder of the residual base metals. PGMs are retained in the residue for further processing and recovery.

**Table 2 - Pressure oxidation of a primary nickel sulfide concentrate**

| Head Assay, % | Co | Cu | Fe | Ni | S |
|---|---|---|---|---|---|
| Concentrate | 0.1 | 2.6 | 16.4 | 4.4 | 9.1 |
| POX residue | 0.0 | 0.1 | 21.2 | 0.3 | 0.1 |
| | | | | | |

| Extraction, % | Co | Cu | Fe | Ni | S |
|---|---|---|---|---|---|
| POX | 94.5 | 97.9 | 0.9 | 95.4 | 95.4 |
| HCI Preleach | 40.0 | 87.0 | 67.0 | 85.0 | 90.0 |

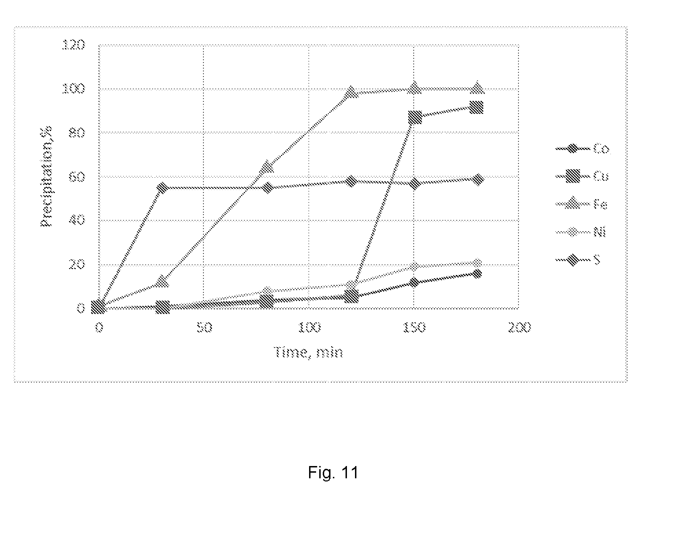

The Fe in the HCI preleach liquor is separated by precipitation using limestone dosing along with air sparging assisted by hydrogen peroxide dosing (which may be derived from oxygen generated by a hydrogen generator), as depicted in Figure 11. Free calcium is precipitated first as crystalline gypsum, which is separated from the precipitated iron oxide by the method described in Example 11.

The residue assayed ~57% Fe, falling close to the industry standard NYMEX traded 62% Fe specification, suggesting that this iron oxide product may be converted to "green steel" or a "green steel" precursor using hydrogen from a hydrogen generator.

### Example 10

### Hydrogen production from a nickel leach residue of Example 8

In this example, which is an augmentation of Example 9, the solid leach residue containing gold, PGM metals, residual iron and elemental sulfur from Example 8 is subjected to a heat treatment pre-conditioning and then subjected to hydrochloric acid leaching using hydrogen peroxide derived from oxygen generated by a hydrogen generator as provided in Example 1. The filtered and washed solid leach residue is then subjected to a physical or chemical separation step to effect the recovery of iron oxide into a separate concentrate. The remaining leach solution after separation is neutralised and purified by addition of limestone and air enriched with oxygen generated by the hydrogen generator, to remove dissolved iron, forming iron oxide product, which is separated using physical separation methods. Carbon dioxide generated from the neutralisation step is captured, using amines or other suitable scrubbing agents, and reacted with hydrogen generated by the hydrogen generator, forming a methanol product. If desired, the recycled carbon dioxide generated from the neutralisation step can be fed into an algal production step as provided in Example 1. Iron oxide is converted to "green steel" or precursor using hydrogen from the hydrogen generator. PGM and gold metal products are separated from the leach solution after the neutralisation step using standard IX/SX techniques, and then recovered from the ion exchange eluate or solvent extraction strip solution by reduction with hydrogen generated by the hydrogen generator.

However, in this augmentation of Example 9, a brine electrolyser is further used to produce reagents for use in the leach or metals recovery unit processes, or for sale. The brine shown in this example is sodium chloride, but may alternatively be another halogen salt, such as calcium or magnesium chloride. In the chlor-alkali configuration, reagents including chlorine gas, hydrochloric acid, hypochlorite solution or salts are produced, in addition to hydrogen gas, which can then be used within the process, such as disclosed in Example 9. In an alternative or parallel chlorate configuration, an oxidising reagent such as sodium chlorate is produced in addition to the hydrogen gas which is used within the process, as disclosed in Example 9. The steps of physical separation in this example can be performed by filtration, thickening, centrifugation or other standard methods.

The steps illustrated in this example may be preceded by the equivalent steps but with a non-oxidising HCI leach, to remove gangue and base metals.

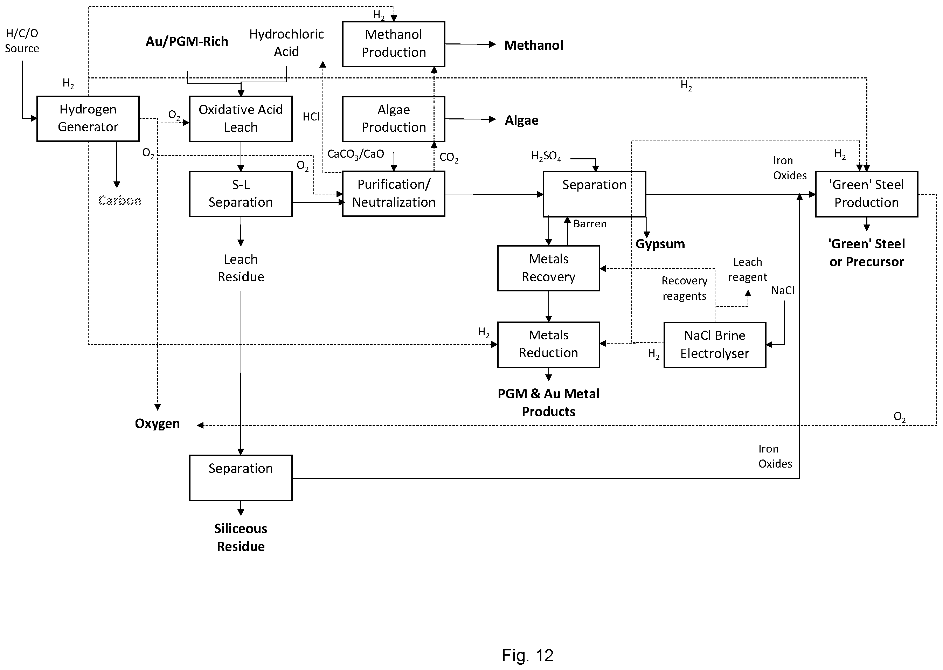

Figure 12 is a simplified block flowsheet diagram illustrating more detail of this one augmented example of implementation of this invention.

### Example 11

### Treatment of a primary nickel-PGM sulfide concentrate

In this example, which is an augmentation of Example 8, the remaining solution after copper solvent extraction is then neutralised and purified by addition of limestone and air enriched with oxygen generated by the hydrogen generator as provided in Example 1, to form a mixed iron hydroxide and gypsum slurry. After solid-liquid separation, this is followed by the addition of slaked lime slurry to form a mixed nickel, cobalt hydroxide and gypsum slurry. Either slurry is subjected, with or without dewatering, to physical or chemical separation methods to separate gypsum. In this specific, non-limiting, example, a hydrocyclone is used to effect the separation of gypsum, to produce a gypsum-bearing underflow slurry and metals hydroxide-bearing overflow slurry, as shown in Table 3.

**Table 3 - Hydrocyclone separation of gypsum from metal hydroxides**

| **Sample** | **Yield** | **Co** | **Cu** | **Fe** | **Ni** | **S** | **Ca** |
|---|---|---|---|---|---|---|---|
| | % | % | % | % | % | % | % |
| OF1 | 24 | 63 | 63 | 56 | 63 | 18 | 16 |
| UF1 | 76 | 37 | 37 | 44 | 37 | 82 | 84 |
| OF2 | 22 | 65 | 65 | 58 | 65 | 16 | 14 |
| UF2 | 78 | 35 | 35 | 42 | 35 | 84 | 86 |
| OF3 | 19 | 65 | 66 | 58 | 66 | 13 | 11 |
| UF3 | 81 | 35 | 34 | 42 | 34 | 87 | 89 |
| OF4 | 16 | 66 | 66 | 56 | 67 | 9 | 8 |
| UF4 | 84 | 34 | 34 | 44 | 33 | 91 | 92 |
| OF5 | 16 | 66 | 66 | 57 | 67 | 10 | 8 |
| UF5 | 84 | 34 | 34 | 43 | 33 | 90 | 92 |

The underflow (UF) solids are then subjected to dilute sulfuric acid leaching to readily dissolve any entrained metal hydroxides, given the well-known low aqueous solubility of gypsum:

CaSO₄ = Ca²⁺ + SO₄²⁻ log₁₀ Ksp = -4.58 (4)

Typically, the sulfuric acid addition is 5-50% excess above the stoichiometric requirements of the neutralisation reactions, for example:

Ni(OH)₂ + H₂SO₄ = NiSO₄ + 2H₂O (5)

Co(OH)₂ + H₂SO₄ = CoSO₄ + 2H₂O (6)

2Fe(OH)₃ + 3H₂SO₄ = Fe₂(SO₄)₃ + 6H₂O (7)

Mn(OH)₂ + H₂SO₄ = MnSO₄ + 2H₂O (8)

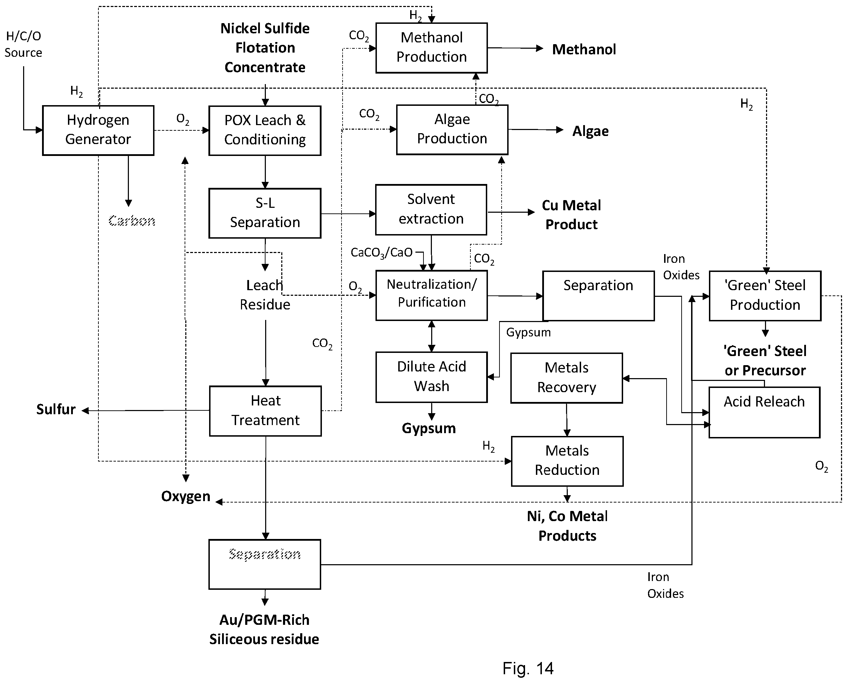

In this example, as illustrated in Figure 14, pregnant leach solution feed from the neutralisation step is used in this leach step. For the purpose of clarity, a single neutralisation stage only is depicted, although two stages at different pH value setpoints may be preferred, to effect separation of metals. The leachate solution from this leach step is then separated from the solid gypsum by conventional solid-liquid separation techniques, leaving a purified gypsum product for disposal or sale, while the leachate solution is recycled back to the neutralisation step, followed by recovery of nickel and cobalt metals from the mixed nickel, cobalt and iron oxide.

The overflow (OF) solids are also subjected to dilute sulfuric acid releaching to yield a slurry comprising a dissolved nickel and cobalt leachate solution, and a solid residue containing mainly iron oxides and some impurities such as manganese. The selective leaching of nickel and cobalt hydroxides from iron (III) oxides is illustrated in the diagram depicted in Figure 14, showing solubility dependence on pH value, resulting in the chemical separation of nickel and cobalt in solution (Eqs. 5 and 6) from iron and manganese in the residue (Eqs. 7 and 8).

The dissolved nickel and cobalt leachate solution is then separated from the solid iron oxide by conventional solid-liquid separation techniques, to yield a purified iron oxide product for conversion to green steel or a precursor, and the dissolved nickel and cobalt leachate solution is then recycled to the metals recovery step for reduction with hydrogen from the hydrogen generator for recovery of nickel and cobalt.

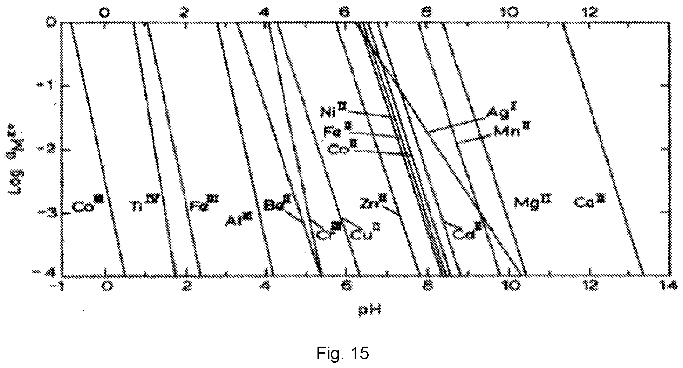

Figure 15 is a simplified block flowsheet diagram illustrating more detail of this one example of implementation of this invention, which may equally be applied to all examples given above.

### REFERENCES

¹K Mayhew, R Mean, L O'Connor and T Williams, NICKEL AND COBALT RECOVERY FROM MESABA CONCENTRATE, ALTA, Ni/Co Conference 2009, Perth Australia. ALTA Metallurgjcal Services Pty Ltd. 16 pp;
²Mitsuo MAMIYA, Isao MATSUOKA, Yulan XUE, Fundamental Study on the Separation of Iron Hydroxide and Gypsum Precipitated in the Neutralization Process by Flotation Method (2nd Report), Journal of the Mining and Metallurgical Institute of Japan, 1982, Volume 98, Issue 1132, Pages 501-505;
³Xiaoqian Peng, Jiayi Zheng, Qian Liu, Qimei Hu, Xing Sun, Jie Li, Weizhen Liu, Zhang Lin, Efficient removal of iron from red gypsum via synergistic regulation of gypsum phase transformation and iron speciation, Science of The Total Environment Volume 791, 15 October 2021, 148319;
⁴EP2279151A1;
⁵S. K. Kawatra, T. C. Eisele and Kyle Shoop, Separation of Flue-Gas Scrubber Sludge into Marketable Products. Second Year, Third Quarterly Technical Progress Report, Performance Period: 3/1/95 to 5/3 1/95 (Quarter #7). Contract No. DE-FG22-93PC93214, U. S. Department of Energy, Pittsburgh Energy Technology Center, Pittsburgh, Pennsylvania, June, 1995.9 pp;
⁶https://digital.library.unt.edu/ark:/67531/metadc622580/m2/1/high res d/125374.pdf
⁷James Vaughan, William Hawker, David White, CHEMICAL ASPECTS OF MIXED NICKEL-COBALT HYDROXIDE PRECIPITATION AND REFINING, ALTA, Ni/Co Conference 2011, Perth Australia. ALTA Metallurgjcal Services Pty Ltd. 13 pp;
⁸WO2002048042A1;
⁹US4036941A;
¹⁰https://onlinelibrary.wiley.com/doi/10.1002/cben.202000014;
¹¹https://www.energy.gov/sites/default/files/2021-09/h2-shot-summit-panel2-methane-pyrolysis.pdf;
¹²https://www.energy.gov/sites/prod/files/2017/05/f34/thermochem borole 2.5.5.403. pdf;
¹³https://www.synergenmet.com/hydrogen-production)
¹⁴https://www.energy.gov/sites/prod/files/2017/09/f37/algae cultivation for carbon c apture and utilization workshop.pdf
¹⁵https://www.nrel.gov/docs/fy01osti/29417.pdf
¹⁶https://www.biofuelsdigest.com/bdigest/2020/07/05/greening-your-beer-with-brewerys-co2-eating-algae-blockchain-tracing-converting-brewery-waste-into-detergents-and-more/s

## Claims

1. A hydrometallurgical process for extraction and recovery, from a feed material or blend of feed materials consisting of any one or more of: a nickel sulfide concentrate, a nickel oxide ore and sulfide concentrate, a nickel oxide ore, a copper-gold-silver sulfide concentrate, a gold-silver sulfide concentrate, a gold-silver-rich residue, a gold-rich residue, a primary nickel-PGM sulfide concentrate and a PGM-rich leach residue, one or more valuable metals or elements consisting of: precious metals selected from a group consisting of platinum group metals (PGMs) i.e. platinum, palladium, rhodium, iridium, ruthenium, osmium, gold and silver; base metals selected from a group consisting of aluminum, copper, lead, nickel, cobalt, tin, tungsten, zinc, cadmium and manganese; sulfur; calcium products including gypsum; iron oxide products; and scandium;
wherein the iron oxide products are converted into "green steel" or a "green steel" precursor, the process consisting of the following steps:
(i) generating hydrogen and oxygen products with the use of a hydrogen generator and electrolysis of water, or generating hydrogen, oxygen and carbon products with the use of a hydrogen generator and hydrocarbon pyrolysis or reforming, including with the use of renewable energy or waste sources;
(ii) leaching the feed material or the blend of feed materials including:
A. under pressure and/or atmospheric conditions and oxidative, neutral or reductive conditions with H₂SO₄, or
B. under atmospheric conditions and non-oxidative conditions with HCI, or
C. under pressure and/or atmospheric conditions and oxidative conditions with HCI or saline brine in conjunction with an oxidising agent
to generate a slurry comprising metal sulfates and other valuble elements in solution and a solid leach residue comprising valuable metals and other valuable elements, and in the case where significant jarosite or basic ferric sulfate is present in the solid residue, subjecting the leach slurry is to a conditioning step to leach iron sulfates into solution;
(iii) separating using using filtration, thickening, centrifugation/cycloning, particle size separation techniques, gravity separation, electrostatic separation, the solid leach residue from the solution in the leach slurry;
(iv) in the case where the valuble metal sulfate in solution is copper, after the separation step (iii), purifying and recovery of copper including by solvent extraction, ion exchange, adsorption, precipitation, cementation, electrowinning or reduction;
(v) neutralising and purifying, by addition of limestone or hydrated or dry lime or a combination thereof and optionally air enriched with oxygen generated from the hydrogen generator, the valuble metals other than copper in the separated solution, thereby to form a slurry comprising the purified metals, solid gypsum and iron oxide products and releasing carbon dioxide;
(vi) capturing released carbon dioxide produced during the neutralising and purifying step, including with the use of scrubbing agents including amines, and utilising the captured carbon dioxide including:
A. to produce methanol for sale, storage, or recycling into step (i) by reacting the carbon dioxide with hydrogen generated by the hydrogen generator; or
B. in an algal production system;
(vii) separating the solid gypsum and iron oxide products from each other and from the remaining purified metals using filtration, thickening, centrifugation/cycloning, particle size separation techniques, gravity separation, or electrostatic separation;
(viii) recovering the remaining purified metals after separation including by solvent extraction, ion exchange, adsorption, precipitation, cementation, electrowinning or reduction;
(ix) recovering remaining iron oxide from the solid leach residue of step (iii), including by subjecting the solid leach residue to heat treatment under reducing, neutral or oxidising conditions to form a heat-treated calcine residue, followed by an additional separation of the solid iron oxide from the calcine residue using filtration, thickening, centrifugation/cycloning, particle size separation techniques, gravity separation, magnetic, or electrostatic separation, leaving a remaining siliceous residue;
(x) reacting the separated iron oxide products from step (vii) and step (ix) including by a molten salt electrolysis route to produce oxygen including for reuse in the hydrometallurgical process, or by hydrogen reduction using hydrogen generated by the hydrogen generator in step (i), to produce Direct Reduced Iron (DRI) or sponge iron, thereby forming "green steel" or a precursor thereof.

2. The hydrometallurgical process according to claim 1, wherein the oxygen generated from hydrogen generation of step (i) or the iron reduction step (x) is used in step (ii).

3. The hydrometallurgical process according to claim 1 or 2, wherein in step (viii), the reduction is performed using hydrogen from the hydrogen generation step (i).

4. The hydrometallurgical process according to any one of claims 1 to 3, wherein in step (vi), the methanol is recycled to the hydrogen generation step (i) to generate carbon, including for processing to form a stable saleable by-product including carbon black, graphite, graphene or carbon nanotubes, as well as hydrogen and oxygen for use in the hydrometallurgical process.

5. The hydrometallurgical process according to any one of claims 1 to 4, wherein in step (x), the reaction process includes the use of renewable energy sources to produce the "green steel" or precursor.

6. The hydrometallurgical process according to any one of claims 1 to 5, wherein step (v) includes partial reduction of the slurry using hydrogen produced by the hydrogen generator or with another reductant, to form one or more magnetic iron phases that are separated from the gypsum by magnetic separation.

7. The hydrometallurgical process according to any one of claims 1 to 6, wherein the neutralising in step (v) includes a secondary neutralisation step consisting of:
a. addition of limestone or hydrated or dry lime to produce a slurry comprising a nickel-cobalt/iron mixed hydroxide precipitate and gypsum;
b. separating the gypsum from the nickel-cobalt/iron mixed hydroxide precipitate by filtration, thickening, centrifugation/cycloning, particle size separation techniques, gravity separation, magnetic, or electrostatic separation;
c. subjecting the separated gypsum to sulfuric acid washing, followed by recycling to step (viii) to recover entrained nickel and cobalt in the gypsum and to produce a gypsum product for disposal or sale;
d. subjecting the separated nickel-cobalt/iron mixed hydroxide precipitate to sulfuric acid releaching to produce a solution comprising nickel and cobalt sulfates and an iron oxide hydrate containing impurity metals including manganese, for disposal or advancing to step (viii); and
e. optionally, after step a. or b. subjecting the slurry or separated solid nickel-cobalt/iron mixed hydroxide precipitate and gypsum to an oxidising leach step with sulfuric acid, to yield gypsum, manganese for disposal or recovery by any one of the methods in step (viii), nickel for recovery by any one of the methods in step (viii), and cobalt.

8. The hydrometallurgical process according to any one of claims 1 to 7, wherein, in the case where the feedstock is a copper-gold-silver sulfide concentrate, the process consists of the following steps:
I) performing steps (i) to (x), including performing the additional step of heat-treating the separated leach residue from the pressure or atmospheric oxidation leaching after step (iii), thereby to volatilize any carbonaceous minerals, if present, and capturing CO₂ from the heat-treatment, including using amines or other suitable scrubbing agents as per step (vi), and recovering residual sulfur by sublimation and condensation;
II) repeating steps (ii) to (x) on the siliceous residue of step (ix), wherein in step (ii) leaching is by non-oxidative HCI leach, to yield a gold-rich siliceous residue in repeated step (ix), and to recover silver metal in repeated step (viii), wherein in the separation step (vii), hydrochloric acid is recovered by distillation for recovery or recycling into the process, the gypsum product is precipitated for recovery, and silver metal is separated by adsorption and recovered by electrowinning or reduction, including with hydrogen generated by the the hydrogen generator of step (i) or by brine electrolysis;
III) subjecting the gold-rich siliceous residue of step (II) to oxidative HCI leaching in step (ii) with oxidizing leach reagent produced via the hydrogen generator of step (i) or by brine electrolysis, followed by repeating steps (iii) to (x), wherein in the separation step (vii) sulfuric acid is added to the purified metals to remove calcium, a gypsum product is precipitated for recovery, and gold metal is separated by adsorption and recovered by electrowinning or reduction, including with hydrogen generated by the hydrogen generator of step (i) or by brine electrolysis.

9. The hydrometallurgical process according to any one of claims 1 to 7, wherein, in the case where the feedstock is a nickel sulfide flotation concentrate containing gold and PGMs, the process consists of the following steps:
(A) performing steps (i) to (x), including performing the additional step of heat-treating the separated leach residue from the pressure or atmospheric oxidation leaching after step (iii), under reducing conditions using hydrogen generated by the hydrogen generator of step (i), thereby to to volatilize any carbonaceous minerals, and capturing CO₂ from the heat-treatment, including using amines or other suitable scrubbing agents as per step (vi), and recovering residual sulfur by sublimation and condensation to generate a gold/PGM-rich siliceous residue in step (ix);
(B) repeating steps (ii) to (x) on the gold/PGM-rich siliceous residue from step (ix) using a non-oxidative HCI leach in step (ii), to yield a gold/PGM-rich siliceous residue in repeated step (ix), and removing gangue and base metals in repeated step (viii), wherein after the separation step (vii), hydrochloric acid is recovered by distillation for recovery or recycling into the process, the gypsum product is precipitated for recovery, and base metals are recovered;
(C) subjecting the gold/PGM-rich siliceous residue of step (B) to oxidative HCI leaching in step (ii) with oxidizing reagent produced via the hydrogen generator of step (i), or by brine electrolysis, followed by repeating steps (iii) to (x), wherein after step (vii), hydrochloric acid is recovered by distillation for recovery or recycling into the process, the gypsum product is precipitated for recovery, and after separation including by ion-exchange or solvent extraction, gold and PGM metals are recovered by reduction, including with hydrogen generated by the hydrogen generator of step (i) or by brine electrolysis.

10. The hydrometallurgical process according to claim 9, wherein in either or both of steps (A), (B) or (C), neutralising step (v) includes a secondary neutralisation by addition of limestone and/or hydrated or dry lime to produce a slurry comprising a nickel-cobalt/iron mixed hydroxide precipitate and gypsum.

11. The hydrometallurgical process according to any one of claims 8 to 10, wherein the heat treatment is performed at from or about 80 - 750 °C for up to 120 minutes, or at from or about 300 - 700 °C for 10 to 30 minutes, under oxidizing, neutral or reducing conditions.

12. The hydrometallurgical process according to claim 11, wherein the heat treatment includes a second heat-treatment performed at from or about 500 - 1000 °C for up to 120 minutes, or at from or about 700 - 1000 °C for 30 to 120 minutes, under oxidizing, neutral or reducing conditions.

13. The hydrometallurgical process according to claim 12, wherein the heat treatment includes a third heat-treatment is performed at from or about 100 - 600 °C for up to 240 minutes, or at from or about 100 - 400 °C for 60 - 180 minutes, under oxidizing, neutral or reducing conditions.

14. The hydrometallurgical process according to claim 12 or 13, wherein the heat treatments are performed as individual steps of a sequential heat treatment process, or as one combined.

15. The hydrometallurgical process according to any one of claims 8 to 14, wherein the heat is generated by hydrogen generated by the hydrogen generator of step (i), by liquid natural gas or another hydrocarbon fuel, by renewable electricity or a combination thereof.

## Patentansprüche

1. Hydrometallurgisches Verfahren zur Gewinnung und Rückgewinnung, aus einem Ausgangsmaterial oder einer Mischung von Ausgangsmaterialien bestehend aus einem oder mehreren von: einem Nickelsulfidkonzentrat, einem Nickeloxiderz- und Sulfidkonzentrat, einem Nickeloxiderz, einem Kupfer-Gold-Silber-Sulfidkonzentrat, einem Gold-Silber-Sulfidkonzentrat, einem Gold-Silber-reichen Rückstand, einem goldreichen Rückstand, einem primären Nickel-PGM-Sulfidkonzentrat und einem PGM-reichen Laugenrückstand, eines oder mehrerer wertvoller Metalle oder Elemente, bestehend aus: Edelmetallen, ausgewählt aus einer Gruppe bestehend aus Platingruppenmetallen (PGMs), d. h. Platin, Palladium, Rhodium, Iridium, Ruthenium, Osmium, Gold und Silber; Basismetallen, ausgewählt aus einer Gruppe bestehend aus Aluminium, Kupfer, Blei, Nickel, Kobalt, Zinn, Wolfram, Zink, Cadmium und Mangan; Schwefel; Calciumprodukten einschließlich Gips; Eisenoxidprodukten; und Scandium;
wobei die Eisenoxidprodukte in "Grünstahl" oder einen "Grünstahl"-Vorläufer umgewandelt werden, wobei das Verfahren die folgenden Schritte beinhaltet:
(i) Erzeugen von Wasserstoff- und Sauerstoffprodukten unter Verwendung eines Wasserstoffgenerators und durch Elektrolyse von Wasser, oder Erzeugen von Wasserstoff-, Sauerstoff- und Kohlenstoffprodukten unter Verwendung eines Wasserstoffgenerators und durch Pyrolyse oder Reformierung von Kohlenwasserstoff, einschließlich unter Verwendung erneuerbarer Energiequellen oder Abfallquellen;
(ii) Auslaugen des Ausgangsmaterials oder der Mischung aus Ausgangsmaterialien, einschließlich:
A. unter Druck und/oder atmosphärischen Bedingungen sowie unter oxidativen, neutralen oder reduktiven Bedingungen mit H₂SO₄, oder
B. unter atmosphärischen Bedingungen und nichtoxidativen Bedingungen mit HCl, oder
C. unter Druck und/oder atmosphärischen Bedingungen sowie oxidativen Bedingungen mit HCl oder Salzlake in Verbindung mit einem Oxidationsmittel,
zum Erzeugen einer Aufschlämmung, die Metallsulfate und andere wertvolle Elemente in Lösung sowie einen wertvolle Metalle und andere wertvolle Elemente umfassenden festen Laugenrückstand enthält, und falls im festen Rückstand nennenswertes Jarosit oder basisches Eisensulfat vorhanden ist, Unterziehen der Laugenaufschlämmung einem Konditionierungsschritt zum Auslaugen von Eisensulfaten in Lösung;
(iii) Trennen des festen Laugenrückstands aus der Lösung in der Laugenaufschlämmung mittels Filtration, Eindickung, Zentrifugation/Zyklonierung, Partikelgrößen-Trenntechniken, Schwerkrafttrennung oder elektrostatischer Trennung;
(iv) falls das wertvolle Metallsulfat in Lösung Kupfer ist, nach Trennschritt (iii) Reinigen und Rückgewinnen von Kupfer einschließlich durch Lösungsmittelextraktion, Ionenaustausch, Adsorption, Präzipitation, Zementierung, Elektrogewinnung oder Reduktion;
(v) Neutralisieren und Reinigen der in der getrennten Lösung enthaltenen wertvollen Metalle außer Kupfer durch Zugabe von Kalkstein oder hydratisiertem oder trockenem Kalk oder einer Kombination davon und optional mit aus dem Wasserstoffgenerator erzeugtem Sauerstoff angereicherter Luft, um dadurch eine Aufschlämmung zu bilden, die die gereinigten Metalle, feste Gips- und Eisenoxidprodukte enthält und Kohlendioxid freisetzt;
(vi) Abfangen von während des Neutralisierungs- und Reinigungsschritts freigesetztem Kohlendioxid, einschließlich unter Verwendung von Waschmitteln wie Aminen, und Nutzen des abgefangenen Kohlendioxids, einschließlich:
A. zur Herstellung von Methanol für Verkauf, Lagerung oder Rückführung in Schritt (i) durch Umsetzen des Kohlendioxids mit vom Wasserstoffgenerator erzeugtem Wasserstoff; oder
B. in einem Algenproduktionssystem;
(vii) Trennen der festen Gips- und Eisenoxidprodukte voneinander und von den verbleibenden gereinigten Metallen durch Filtration, Eindickung, Zentrifugation/Zyklonierung, Partikelgrößen-Trenntechniken, Schwerkrafttrennung oder elektrostatischer Trennung;
(viii) Rückgewinnen der verbleibenden gereinigten Metalle nach der Trennung, einschließlich durch Lösungsmittelextraktion, Ionenaustausch, Adsorption, Präzipitation, Zementierung, Elektrogewinnung oder Reduktion;
(ix) Rückgewinnen des verbleibenden Eisenoxids aus dem festen Laugenrückstand aus Schritt (iii), einschließlich durch Unterziehen des festen Laugenrückstands einer Wärmebehandlung unter reduzierenden, neutralen oder oxidierenden Bedingungen zur Bildung eines wärmebehandelten Kalzinierungsrückstands, gefolgt von einer zusätzlichen Trennung des festen Eisenoxids vom Kalzinierungsrückstand durch Filtration, Eindickung, Zentrifugation/Zyklonierung, Partikelgrößen-Trenntechniken, Schwerkrafttrennung, magnetischer oder elektrostatischer Trennung, wobei ein verbleibender silikatischer Rückstand zurückbleibt;
(x) Umsetzen der getrennten Eisenoxidprodukte aus Schritt (vii) und Schritt (ix), einschließlich durch Schmelzsalzelektrolyse, um Sauerstoff unter anderem zur Wiederverwendung im hydrometallurgischen Verfahren zu erzeugen, oder durch Wasserstoffreduktion mit vom Wasserstoffgenerator in Schritt (i) erzeugtem Wasserstoff, um DRI (Direct Reduced Iron) oder Schwammeisen herzustellen, wodurch "grüner Stahl" oder ein Vorläufer davon gebildet wird.

2. Hydrometallurgisches Verfahren nach Anspruch 1, wobei der durch die Wasserstofferzeugung in Schritt (i) oder den Eisenreduktionsschritt (x) erzeugte Sauerstoff in Schritt (ii) verwendet wird.

3. Hydrometallurgisches Verfahren nach Anspruch 1 oder 2, wobei in Schritt (viii) die Reduktion unter Verwendung von Wasserstoff aus dem Wasserstofferzeugungsschritt (i) durchgeführt wird.

4. Hydrometallurgisches Verfahren nach einem der Ansprüche 1 bis 3, wobei in Schritt (vi) das Methanol in den Wasserstofferzeugungsschritt (i) zurückgeführt wird, um Kohlenstoff zu erzeugen, einschließlich zur Verarbeitung zur Bildung eines stabilen, verkaufsfähigen Nebenprodukts, das Ruß, Graphit, Graphen oder Kohlenstoffnanoröhren umfasst, sowie Wasserstoff und Sauerstoff zur Verwendung im hydrometallurgischen Verfahren.

5. Hydrometallurgisches Verfahren nach einem der Ansprüche 1 bis 4, wobei in Schritt (x) das Reaktionsverfahren die Nutzung erneuerbarer Energiequellen zur Herstellung des "grünen Stahls" oder Vorläufers beinhaltet.

6. Hydrometallurgisches Verfahren nach einem der Ansprüche 1 bis 5, wobei Schritt (v) die teilweise Reduktion der Aufschlämmung unter Verwendung von vom Wasserstoffgenerator erzeugtem Wasserstoff oder mit einem anderen Reduktionsmittel umfasst, um eine oder mehrere magnetische Eisenphasen zu bilden, die durch magnetische Trennung vom Gips getrennt werden.

7. Hydrometallurgisches Verfahren nach einem der Ansprüche 1 bis 6, wobei die Neutralisierung in Schritt (v) einen sekundären Neutralisierungsschritt umfasst, bestehend aus:
a. Zugeben von Kalkstein oder hydratisiertem oder trockenem Kalk zur Herstellung einer Aufschlämmung, die ein Nickel-Kobalt/Eisen-Mischhydroxid-Präzipitat und Gips umfasst;
b. Trennen des Gipses von dem Nickel-Kobalt/Eisen-Mischhydroxid-Präzipitat durch Filtration, Eindickung, Zentrifugation/Zyklonierung, Partikelgrößen-Trenntechniken, Schwerkrafttrennung, magnetische oder elektrostatische Trennung;
c. Unterziehen des getrennten Gipses einer Schwefelsäurewäsche, gefolgt von der Rückführung zu Schritt (viii), um im Gips eingeschlossenes Nickel und Kobalt zurückzugewinnen und ein Gips-Produkt zur Entsorgung oder zum Verkauf herzustellen;
d. Unterziehen des getrennten Nickel-Kobalt/Eisen-Mischhydroxid-Präzipitats einer Schwefelsäureauslaugung, um eine Lösung herzustellen, die Nickel- und Kobaltsulfate sowie ein Eisenoxidhydrat enthält, das Verunreinigungen wie Mangan enthält, zur Entsorgung oder zum Weiterleiten zu Schritt (viii); und
e. optional, nach Schritt a. oder b., Unterziehen der Aufschlämmung oder des getrennten festen Nickel-Kobalt/Eisen-Mischhydroxid-Präzipitats und des Gipses einem oxidierenden Auslaugungsschritt mit Schwefelsäure, um Gips, Mangan zur Entsorgung oder Rückgewinnung durch eines der Verfahren in Schritt (viii), Nickel zur Rückgewinnung durch eines der Verfahren in Schritt (viii) und Kobalt zu erhalten.

8. Hydrometallurgisches Verfahren nach einem der Ansprüche 1 bis 7, wobei, falls das Ausgangsmaterial ein Kupfer-Gold-Silber-Sulfid-Konzentrat ist, das Verfahren die folgenden Schritten beinhaltet:
I) Durchführen der Schritte (i) bis (x), einschließlich der Durchführung des zusätzlichen Schritts der Wärmebehandlung des getrennten Laugenrückstands aus der Druck- oder atmosphärischen Oxidationsauslaugung nach Schritt (iii), um dadurch gegebenenfalls vorhandene kohlenstoffhaltige Mineralien zu verflüchtigen, und Abfangen von CO₂ aus der Wärmebehandlung, einschließlich der Verwendung von Aminen oder anderen geeigneten Waschmitteln gemäß Schritt (vi), sowie Zurückgewinnen von Restschwefel durch Sublimation und Kondensation;
II) Wiederholen der Schritte (ii) bis (x) an dem silikatischen Rückstand aus Schritt (ix), wobei in Schritt (ii) die Auslaugung durch nicht-oxidative HCl-Auslaugung erfolgt, um in dem wiederholten Schritt (ix) einen goldreichen silikatischen Rückstand zu erhalten und in dem wiederholten Schritt (viii) Silbermetall zurückzugewinnen, wobei im Trennschritt (vii) Salzsäure durch Destillation zur Rückgewinnung oder Rückführung in den Prozess gewonnen wird, das Gipsprodukt zur Rückgewinnung ausgefällt wird und Silbermetall durch Adsorption abgetrennt und durch Elektrogewinnung oder Reduktion zurückgewonnen wird, einschließlich mit vom Wasserstoffgenerator aus Schritt (i) oder durch Soleelektrolyse erzeugtem Wasserstoff;
III) Unterziehen des goldreichen silikatischen Rückstands aus Schritt (II) einer oxidativen HCl-Auslaugung in Schritt (ii) mit einem oxidierenden Laugenreagenz, das über den Wasserstoffgenerator aus Schritt (i) oder durch Soleelektrolyse erzeugt wurde, gefolgt von der Wiederholung der Schritte (iii) bis (x), wobei im Trennschritt (vii) den gereinigten Metallen Schwefelsäure zugesetzt wird, um Calcium zu entfernen, ein Gipsprodukt zur Rückgewinnung ausgefällt wird und Goldmetall durch Adsorption getrennt und durch Elektrogewinnung oder Reduktion zurückgewonnen wird, einschließlich mit vom Wasserstoffgenerator aus Schritt (i) oder durch Soleelektrolyse erzeugtem Wasserstoff.

9. Hydrometallurgisches Verfahren nach einem der Ansprüche 1 bis 7, wobei, falls das Ausgangsmaterial ein Nickelsulfid-Flotationskonzentrat ist, das Gold und PGMs enthält, das Verfahren die folgenden Schritte beinhaltet:
(A) Durchführen der Schritte (i) bis (x), einschließlich der Durchführung des zusätzlichen Schritts der Wärmebehandlung des getrennten Laugenrückstands aus der Druck- oder atmosphärischen Oxidationsauslaugung nach Schritt (iii) unter reduzierenden Bedingungen mittels vom Wasserstoffgenerator von Schritt (i) erzeugten Wasserstoffs, um dadurch alle kohlenstoffhaltigen Mineralien zu verflüchtigen, und das Abfangen von CO₂ aus der Wärmebehandlung, einschließlich der Verwendung von Aminen oder anderen geeigneten Waschmitteln gemäß Schritt (vi), sowie Rückgewinnen von Restschwefel durch Sublimation und Kondensation, um in Schritt (ix) einen Gold-/PGMreichen silikatischen Rückstand zu erzeugen;
(B) Wiederholen der Schritte (ii) bis (x) an dem Gold-/PGM-reichen silikatischen Rückstand aus Schritt (ix) mittels einer nicht-oxidativen HCl-Lauge in Schritt (ii), um in dem wiederholten Schritt (ix) einen Gold-/PGM-reichen silikatischen Rückstand zu erhalten, und Entfernen von Gangart und unedlen Metallen im wiederholten Schritt (viii), wobei nach dem Trennschritt (vii) Salzsäure durch Destillation zur Rückgewinnung oder Rückführung in den Prozess gewonnen wird, das Gipsprodukt zur Rückgewinnung ausgefällt wird und unedle Metalle zurückgewonnen werden;
(C) Unterziehen des Gold-/PGM-reichen silikatischen Rückstands aus Schritt (B) einer oxidativen HCl-Auslaugung in Schritt (ii) mit einem Oxidationsmittel, das über den Wasserstoffgenerator aus Schritt (i) oder durch Soleelektrolyse hergestellt wird, gefolgt von der Wiederholung der Schritte (iii) bis (x), wobei nach Schritt (vii) Salzsäure durch Destillation zur Rückgewinnung oder Rückführung in den Prozess gewonnen wird, das Gips-Produkt zur Rückgewinnung ausgefällt wird und nach der Trennung, einschließlich durch Ionenaustausch oder Lösungsmittelextraktion, Gold und PGM-Metalle durch Reduktion zurückgewonnen werden, einschließlich mit vom Wasserstoffgenerator aus Schritt (i) oder durch Soleelektrolyse erzeugtem Wasserstoff.

10. Hydrometallurgisches Verfahren nach Anspruch 9, wobei in einem oder beiden der Schritte (A), (B) oder (C) der Neutralisationsschritt (v) eine sekundäre Neutralisation durch Zugabe von Kalkstein und/oder Hydrat- oder Trockenkalk beinhaltet, um eine Aufschlämmung zu erzeugen, die ein Nickel-Kobalt/Eisen-Mischhydroxid-Präzipitat und Gips enthält.

11. Hydrometallurgisches Verfahren nach einem der Ansprüche 8 bis 10, wobei die Wärmebehandlung bei etwa 80 bis 750 °C für bis zu 120 Minuten oder bei etwa 300 bis 700 °C für 10 bis 30 Minuten unter oxidierenden, neutralen oder reduzierenden Bedingungen durchgeführt wird.

12. Hydrometallurgisches Verfahren nach Anspruch 11, wobei die Wärmebehandlung eine zweite Wärmebehandlung umfasst, die bei etwa 500 bis 1000 °C für bis zu 120 Minuten oder bei etwa 700 bis 1000 °C für 30 bis 120 Minuten unter oxidierenden, neutralen oder reduzierenden Bedingungen durchgeführt wird.

13. Hydrometallurgisches Verfahren nach Anspruch 12, wobei die Wärmebehandlung eine dritte Wärmebehandlung umfasst, die bei etwa 100 bis 600 °C für bis zu 240 Minuten oder bei etwa 100 bis 400 °C für 60 bis 180 Minuten unter oxidierenden, neutralen oder reduzierenden Bedingungen durchgeführt wird.

14. Hydrometallurgisches Verfahren nach Anspruch 12 oder 13, wobei die Wärmebehandlungen als einzelne Schritte eines sequenziellen Wärmebehandlungsprozesses oder als ein kombinierter Schritt durchgeführt werden.

15. Hydrometallurgisches Verfahren nach einem der Ansprüche 8 bis 14, wobei die Wärme durch vom Wasserstoffgenerator von Schritt (i) erzeugtem Wasserstoff durch Flüssigerdgas oder einen anderen Kohlenwasserstoffbrennstoff, durch erneuerbaren Strom oder eine Kombination davon erzeugt wird.

## Revendications

1. Procédé hydrométallurgique pour extraction ou récupération, d'un matériau d'alimentation ou d'un mélange de matériaux d'alimentation composé d'un ou de plusieurs d'entre : un concentré de sulfure de nickel, un concentré de minerai d'oxyde de nickel et de sulfure, un minerai d'oxyde de nickel, un concentré de sulfure de cuivre-or-argent, un concentré de sulfure d'or-argent, un résidu riche en or et en argent, un résidu riche en or, un concentré de sulfure primaire de nickel et d'EGP et un résidu de lixiviation riche en EGP, un ou plusieurs métaux ou éléments précieux composés de : métaux précieux sélectionnés parmi un groupe composé d'éléments du groupe platine (EGP), c-à-d. platine, palladium, rhodium, iridium, ruthénium, osmium, or et argent ; des métaux de base sélectionnés parmi un groupe composé d'aluminium, cuivre, plomb, nickel, cobalt, étain, tungstène, zinc, cadmium et manganèse ; soufre ; produits de calcium y compris gypse ; produits d'oxyde de fer ; et scandium ;
dans lequel les produits d'oxyde de fer sont convertis en 'acier vert' ou en précurseur 'd'acier vert', le procédé étant composé des étapes suivantes :
(i) générer des produits d'hydrogène et d'oxygène au moyen d'un générateur d'hydrogène et de l'électrolyse de l'eau, ou générer des produits d'hydrogène, d'oxygène et de carbone au moyen d'un générateur d'hydrogène et de pyrolyse ou reformage d'hydrocarbures, y compris l'utilisation d'énergie renouvelable et de sources de déchets ;
(ii) lixivier le matériau d'alimentation ou le mélange de matériaux d'alimentation comprenant :
A. dans des conditions sous pression et/ou atmosphériques et des conditions oxydatives, neutres ou réductrices avec du H₂SO₄, ou
B. dans des conditions atmosphériques et des conditions non oxydatives avec du HCl, ou
C. dans des conditions sous pression et/ou atmosphériques et des conditions oxydatives avec du HCL ou de la saumure saline conjointement avec un agent oxydant afin de produire une boue comprenant des sulfates métalliques et d'autres éléments précieux en solution et un résidu solide de lixiviation comprenant des métaux précieux et autres éléments précieux, et dans le cas dans lequel de la jarosite ou du sulfate ferrique basique est présent dans le résidu solide, soumettre la boue de lixiviation à une étape de conditionnement afin de lixivier les sulfates de fer en solution ;
(iii) séparer par filtration, épaississement, centrifugation/cyclonage, techniques de séparation granulométrique, séparation par gravité, séparation électrostatique, le résidu solide de lixiviation de la solution dans la boue de lixiviation ;
(iv) dans le cas dans lequel le sulfate de métal précieux en solution est du cuivre, après l'étape de séparation (iii), purifier et récupérer le cuivre y compris par extraction par solvant, échange d'ions, adsorption, précipitation, cémentation, extraction électrolytique ou réduction ;
(v) neutraliser et purifier, par l'addition de calcaire ou de chaux hydratée ou sèche ou une combinaison des mêmes et optionnellement de l'air enrichi avec de l'oxygène généré par le générateur d'hydrogène, les métaux précieux autres que le cuivre dans la solution séparée, pour former ainsi une boue comprenant les métaux purifiés, des produits solides de gypse et d'oxyde de fer et libérer le dioxyde de carbone ;
(vi) capturer le dioxyde de carbone libéré produit durant l'étape de neutralisation et de purification, y compris en utilisant des agents de lavage comprenant des amines, et utiliser le dioxyde de carbone capturé y compris :
A. pour produire du méthanol pour vente, stockage ou recyclage à l'étape (i) en faisant réagir le dioxyde de carbone avec de l'hydrogène généré par le générateur d'hydrogène ; ou
B. dans un système de production d'algues ;
(vii) séparer les produits solides de gypse et d'oxyde de fer les uns des autres et des métaux purifiés restants par filtration, épaississement, centrifugation/cyclonage, techniques de séparation granulométrique, séparation par gravité ou séparation électrostatique ;
(viii) récupérer les métaux purifiés restants après la séparation y compris par extraction par solvant, échange d'ions, adsorption, précipitation, cémentation, extraction électrostatique ou réduction ;
(ix) récupérer l'oxyde de fer restant du résidu solide de lixiviation de l'étape (iii), y compris en soumettant le résidu solide de lixiviation à un traitement thermique dans des conditions réductrices, neutres ou oxydantes pour former un résidu de calcination traité par la chaleur, suivi par une séparation supplémentaire de l'oxyde de fer solide du résidu de calcination par filtration, épaississement, centrifugation/cyclonage, techniques de séparation granulométrique, séparation par gravité, séparation magnétique ou électrostatique, laissant un résidu siliceux restant ;
(x) faire réagir les produits d'oxyde de fer séparés de l'étape (vii) et de l'étape (ix) y compris par une voie d'électrolyse en sel fondu pour produire de l'oxygène y compris pour réutilisation dans le procédé hydrométallurgique, ou par réduction par hydrogène en utilisant l'hydrogène généré par le générateur d'hydrogène à l'étape (i), afin de produire du fer de réduction directe (FRD) ou du fer spongieux, formant ainsi de 'l'acier vert' ou un précurseur du même.

2. Procédé hydrométallurgique selon la revendication 1, dans lequel l'oxygène généré par le générateur d'hydrogène à l'étape (i) ou à l'étape de réduction de fer (x) est utilisé à l'étape (ii).

3. Procédé hydrométallurgique selon la revendication 1 ou 2, dans lequel à l'étape (viii), la réduction est effectuée en utilisant de l'hydrogène de l'étape de génération d'hydrogène (i).

4. Procédé hydrométallurgique selon l'une quelconque des revendications 1 à 3, dans lequel à l'étape (vi), le méthanol est recyclé à l'étape de génération d'hydrogène (i) pour produire du carbone, y compris pour traitement afin de former un sous-produit stable vendable comprenant du noir de carbone, du graphite, du graphène ou des nanotubes de carbone, ainsi que de l'hydrogène et de l'oxygène pour utilisation dans le procédé hydrométallurgique.

5. Procédé hydrométallurgique selon l'une quelconque des revendications 1 à 4, dans lequel à l'étape (x), le processus de réaction comprend l'utilisation de sources d'énergie renouvelable pour produire 'l'acier vert' ou un précurseur.

6. Procédé hydrométallurgique selon l'une quelconque des revendications 1 à 5, dans lequel l'étape (v) comprend la réduction partielle de la boue en utilisant de l'hydrogène produit par le générateur d'hydrogène ou avec un autre réducteur, afin de former une ou plusieurs phases magnétiques du fer qui sont séparées du gypse par séparation magnétique.

7. Procédé hydrométallurgique selon l'une quelconque des revendications 1 à 6, dans lequel la neutralisation à l'étape (v) comprend une étape de neutralisation secondaire composée de :
a. l'addition de calcaire ou de chaux hydratée ou sèche pour produire une boue comprenant un précipité d'hydroxyde mixte de nickel-cobalt/fer et du gypse ;
b. séparer le gypse du précipité d'hydroxyde mixte de nickel-cobalt/fer par filtration, épaississement, centrifugation/cyclonage, techniques de séparation granulométrique, séparation par gravité, séparation magnétique ou électrostatique ;
c. soumettre le gypse séparé à un lavage à l'acide sulfurique, suivi par le recyclage à l'étape (viii) pour récupérer le nickel et le cobalt entraînés dans le gypse et produire un produit de gypse pour élimination ou vente ;
d. soumettre le précipité d'hydroxyde mixte de nickel-cobalt/fer séparé à une nouvelle lixiviation à l'acide sulfurique pour produire une solution comprenant des sulfates de nickel et de cobalt et un hydrate d'oxyde de fer contenant des métaux d'impureté comprenant du manganèse, pour élimination ou passer à l'étape (viii) ; et
e. optionnellement, après l'étape a. ou b., soumettre la boue ou le précipité d'hydroxyde mixte de nickel-cobalt/fer et gypse à une étape de lixiviation oxydante avec de l'acide sulfurique, pour donner du gypse, du manganèse pour élimination ou récupération par l'un quelconque des processus de l'étape (viii), du nickel pour récupération par l'un quelconque des processus de l'étape (viii) et du cobalt.

8. Procédé hydrométallurgique selon l'une quelconque des revendications 1 à 7, dans lequel dans le cas dans lequel la charge d'alimentation est un concentré de sulfure de cuivre-or-argent, le procédé se compose des étapes suivantes :
I) effectuer les étapes (i) à (x), y compris effectuer l'étape supplémentaire de traitement thermique du résidu de lixiviation séparé provenant de la lixiviation par oxydation sous pression ou atmosphérique après l'étape (iii), pour volatiliser ainsi des minéraux carbonés, si présents, et capturer le CO₂ du traitement thermique, comprenant utiliser des amines ou autres agents de lavage appropriés comme à l'étape (vi), et récupérer le soufre résiduel par sublimation et condensation ;
II) répéter les étapes (ii) à (x) sur le résidu siliceux de l'étape (ix), dans lequel la lixiviation à l'étape (ii) se fait par lixiviation non oxydative à l'HCl, pour donner un résidu siliceux riche en or à l'étape répétée (ix), et récupérer le métal d'argent à l'étape répétée (viii), dans lequel à l'étape de séparation (vii), l'acide chlorhydrique est récupéré par distillation pour récupération ou recyclage dans le procédé, le produit de gypse est précipité pour récupération, et le métal d'argent est séparé par adsorption et récupéré par extraction électrolytique ou réduction, y compris avec de l'hydrogène généré par le générateur d'hydrogène à l'étape (i) ou par électrolyse au sel ;
III) soumettre le résidu siliceux riche en or de l'étape (II) à la lixiviation oxydative à l'HCl à l'étape (ii) avec un réactif de lixiviation oxydant produit via le générateur d'hydrogène à l'étape (i) ou par électrolyse au sel, puis répéter les étapes (iii) à (x), dans lequel à l'étape (vii) de séparation, de l'acide sulfurique est ajouté aux métaux purifiés pour retirer le calcium, un produit de gypse est précipité pour récupération, un métal d'or est séparé par adsorption et récupéré par extraction électrostatique ou réduction, y compris avec de l'hydrogène généré par le générateur d'hydrogène à l'étape (i) ou par électrolyse au sel.

9. Procédé hydrométallurgique selon l'une quelconque des revendications 1 à 7, dans lequel, dans le cas dans lequel la charge d'alimentation est un concentré de flottation de sulfure de nickel contenant de l'or et des EGP, le procédé se compose des étapes suivantes :
(A) effectuer les étapes (i) à (x), y compris effectuer l'étape supplémentaire de traitement thermique du résidu de lixiviation séparé provenant de la lixiviation par oxydation sous pression ou atmosphérique après l'étape (iii), dans des conditions réductrices en utilisant l'hydrogène généré par le générateur d'hydrogène à l'étape (i), afin de volatiliser ainsi tous minéraux carbonés quelconques, et capturer le CO₂ du traitement thermique, y compris en utilisant des amines ou autres agents de lavage appropriés comme à l'étape (vi), et récupérer le soufre résiduel par sublimation et condensation afin de produire un résidu siliceux riche en or/EGP à l'étape (ix) ;
(B) répéter les étapes (ii) à (x) sur le résidu siliceux riche en or de l'étape (ix) en utilisant une lixiviation non oxydative à l'HCl à l'étape (ii), pour donner un résidu siliceux riche en or/EGP à l'étape répétée (ix), et retirer la gangue et les métaux de base à l'étape répétée (iii), dans lequel après l'étape de séparation (vii), l'acide chlorhydrique est récupéré par distillation pour récupération ou recyclage dans le procédé, le produit de gypse est précipité pour récupération, et les métaux de base sont récupérés ;
(C) soumettre le résidu siliceux riche en or/EGP de l'étape (B) à la lixiviation oxydative à l'HCI à l'étape (ii) avec un réactif oxydant produit via le générateur d'hydrogène à l'étape (i), ou par électrolyse au sel, puis répéter les étapes (iii) à (x), dans lequel après l'étape (vii), l'acide chlorhydrique est récupéré par distillation pour récupération ou recyclage dans le procédé, le produit de gypse est précipité pour récupération, et après la séparation y compris par échange d'ions ou extraction par solvant, les métaux d'or et EGP sont récupérés par réduction, y compris avec de l'hydrogène généré par le générateur d'hydrogène à l'étape (i) ou par électrolyse au sel.

10. Procédé hydrométallurgique selon la revendication 9, dans lequel soit dans l'une ou l'autre soit dans deux des étapes (A), (B) ou (C), l'étape de neutralisation (v) comprend une neutralisation secondaire par l'addition de calcaire et/ou de chaux hydratée ou sèche pour produire une boue comprenant un précipité d'hydroxyde mixte de nickel-cobalt/fer et de gypse.

11. Procédé hydrométallurgique selon l'une quelconque des revendications 8 à 10, dans lequel le traitement thermique est effectué à entre ou environ 80 - 750 °C pendant un maximum de 120 minutes, ou entre ou environ 300 - 700 °C pendant 10 à 30 minutes, dans des conditions oxydantes, neutres ou réductrices.

12. Procédé hydrométallurgique selon la revendication 11, dans lequel le traitement thermique comprend un deuxième traitement thermique effectué à entre ou environ 500 - 1000 °C pendant un maximum de 120 minutes, ou entre ou environ 700 - 1000 °C pendant 30 à 120 minutes, dans des conditions oxydantes, neutres ou réductrices.

13. Procédé hydrométallurgique selon la revendication 12, dans lequel le traitement thermique comprend un troisième traitement thermique effectué à entre ou environ 100 - 600 °C pendant un maximum de 240 minutes, ou à entre ou environ 100- 400 °C pendant 60 - 180 minutes, dans des conditions oxydantes, neutres ou réductrices.

14. Procédé hydrométallurgique selon la revendication 12 ou 13, dans lequel les traitements thermiques sont effectués comme des étapes individuelles d'un procédé de traitement thermique séquentiel, ou comme une étape combinée.

15. Procédé hydrométallurgique selon l'une quelconque des revendications 8 à 14, dans lequel la chaleur est générée par l'hydrogène généré par le générateur d'hydrogène à l'étape (i), par du gaz naturel liquide ou un autre carburant d'hydrocarbure, par de l'électricité renouvelable ou une combinaison des mêmes.
